# EUROPEAN PATENT SPECIFICATION

(11) **EP 3 386 177 B1**
(45) Date of publication and mention of the grant of the patent: **22.11.2023**
(21) Application number: 18158057.2
(22) Date of filing: 22.02.2018
(51) Int. Cl.: H04M 9/02, H04L 7/04, H04M 11/02, H04N 7/18

(54) **COMMUNICATION APPARATUS AND COMMUNICATION METHOD**
KOMMUNIKATIONSVORRICHTUNG UND KOMMUNIKATIONSVERFAHREN
PROCÉDÉ DE COMMUNICATION ET APPAREIL DE COMMUNICATION

(30) Priority: 03.04.2017 JP 2017073899
(43) Date of publication of application: 10.10.2018
(73) Proprietor: Panasonic Intellectual Property Management Co., Ltd., Osaka-shi, Osaka 540-6207 (JP)
(72) Inventor: YAMAMOTO, Takashi, Osaka, 540-6207 (JP)
(74) Representative: Eisenführ Speiser

(56) References cited:
- JP-A- H07 273 807
- JP-B1- 5 979 523
- JP-B1- 5 984 028
- US-A- 5 903 613

## Description

### Technical field

The present disclosure relates to a communication apparatus for use in an intercom system and also to a communication method for an intercom system.

### Background Art

In recent years, residential intercom systems for performing digital communication between devices connected via a two-wire cable have been popular. Patent Literature (hereinafter, referred to as "PTL") 1 discloses an intercom system of star-type wiring in which an entrance slave unit installed at a house entrance, an indoor monitoring base unit installed for a resident to answer in response to a call from entrance slave unit, an extension monitor, and a second indoor monitoring base unit installed for two-household are connected together via two-wire cables for performing digital communication.

Each device detects synchronization timing (timing of the first bit of received data) with a communication counterpart, using preamble data placed to the top of a received signal.

Moreover, PTL 1 describes a technique of connecting two-wire cables, using star-type wiring in which an indoor monitoring base unit is connected as a center with each connection device on a one to one basis, and enabling digital communication between the indoor monitoring base unit and the connection device and non-polarization of two-wire cable connection.
PTL 2 describes a technique to connect an equipment with a communication path without considering a connection polarity for the communication path having the polarity. A first criterion value having the normal value of plural bits and a second criterion value inverting each bit value are set to a signal processing part. In the signal processing part, the matching of the first and second criterion values for a received polarity decision signal is decided. A connection switch circuit maintains the bit values of the subsequent transmission and reception data as it is if the polarity decision signal is matched with the first criterion value and transmits data. The circuit inverts the bit values of the subsequent transmission and reception data if the polarity decision signal is matched with the second criterion value and transmits data.

### Citation List

### Patent Literature

PTL 1
   Japanese Patent No. 5984028
PTL 2
   Japanese Patent Application No. H07-273807

### Summary of Invention

### Technical Problem

In case of a multiple dwelling intercom system in which daisy-chain-type wiring is often used, the intercom system is formed of a lobby station installed at, for example, a shared entrance of a multiple dwelling; an indoor monitor installed at each dwelling unit in order for a resident to answer in response to a call from the lobby station; and a repeater connected between the lobby station and indoor monitor. In this case, when a plurality of repeaters are connected via two-wire cables, using daisy-chain-type wiring, data transfer by digital communication is repeated by each repeater. When data transfer is performed a large number of times, the data format of a preamble of digital data may collapse and may cause a failure in performing accurate data communication. In the related art involving transfer with a less number of times, however, there has been no discussion about a measure for deterioration of communication quality caused by collapse of the data format of preamble data.

Furthermore, when a plurality of devices are connected via two-wire cables using daisy-chain-type wiring, the two-wire cable connections are in multiple layers, a measure different from a measure for star-type wiring is required for non-polarization of two-wire cable connection. There has been no discussion so far about a measure for non-polarization of two-wire cables (measure for deterioration of communication quality for normal communication in case of reverse connection) in daisy-chain-type multiple layer connection wiring, however.

### Solution to Problem

One non-limiting and exemplary embodiment facilitates providing a communication apparatus and a communication method each enabling prevention of deterioration of communication quality in an intercom system in which a plurality of devices are connected to each other via a two-wire cable.

A communication apparatus of the present disclosure is provided as defined in claim 1.

A communication method of the present disclosure is provided in claim 12.

### Advantageous Effects of Invention

According to the present disclosure, deterioration of communication quality can be prevented in an intercom system in which a plurality of devices are connected to each other via a two-wire cable.

### Brief Description of Drawings

FIG. 1 is a system configuration diagram illustrating a configuration of an intercom system according to Embodiment 1 of the present disclosure;
FIG. 2A is a frame configuration diagram illustrating a frame configuration and time slot configuration according to Embodiment 1 of this disclosure;
FIG. 2B is a diagram illustrating a frame format of control data according to Embodiment 1 of this disclosure;
FIG. 3 is a block diagram illustrating a configuration of a lobby station according to Embodiment 1 of this disclosure;
FIG. 4 is a block diagram illustrating a configuration of a repeater according to Embodiment 1 of this disclosure;
FIG. 5 is a block diagram illustrating a configuration of an indoor monitor according to Embodiment 1 of this disclosure;
FIG. 6 is a diagram illustrating an example of modulation processing for packet data (1 bit);
FIG. 7 is a diagram illustrating an example of modulation processing for packet data (multiple bits);
FIG. 8 is a diagram illustrating an example of preamble data used in Embodiment 1 of this disclosure;
FIG. 9 is a block diagram illustrating an internal configuration of a received-data processing section of the lobby station according to Embodiment 1 of this disclosure;
FIG. 10 is a diagram illustrating an example of synchronization detection processing of the lobby station according to Embodiment 1 of this disclosure;
FIG. 11 is a diagram for describing detection of a unique pattern by the lobby station according to Embodiment 1 of this disclosure;
FIG. 12 is a diagram for describing timing adjustment processing of the lobby station according to Embodiment 1 of this disclosure;
FIG. 13 is a first diagram for describing decoding processing of the lobby station according to Embodiment 1 of this disclosure;
FIG. 14 is a second diagram for describing the decoding processing of the lobby station according to Embodiment 1 of this disclosure;
FIG. 15 is a third diagram for describing the decoding processing of the lobby station according to Embodiment 1 of this disclosure;
FIG. 16 is a flowchart indicating an example of an operation of synchronization detection processing according to Embodiment 1 of this disclosure;
FIG. 17 is a diagram for describing time slot assignment in a basic communication frame according to Embodiment 1 of this disclosure;
FIG. 18 is a sequence diagram from a standby state to a communication state (starting the lobby station) according to Embodiment 1 of this disclosure;
FIG. 19 is a sequence diagram from the standby state to the communication state (starting the indoor monitor) according to Embodiment 1 of this disclosure;
FIG. 20 is a block diagram illustrating an internal configuration of a data reproduction section of the lobby station according to Embodiment 1 of this disclosure;
FIG. 21 is a block diagram illustrating an internal configuration of a transfer-data processing section of the repeater according to Embodiment 1 of this disclosure;
FIG. 22 is a diagram illustrating a specific example of routing control of the repeater according to Embodiment 1 of this disclosure;
FIG 23 is a diagram illustrating an internal configuration of a routing control section of the repeater according to Embodiment 1 of this disclosure;
FIG. 24 is a block diagram illustrating a configuration of a lobby station according to Variation 1 of Embodiment 1 of this disclosure;
FIG. 25 is a system configuration diagram illustrating a configuration of an intercom system according to Variation 2 of Embodiment 1 of this disclosure;
FIG. 26 is a block diagram illustrating a configuration of an indoor monitor according to Variation 2 of Embodiment 1 of this disclosure;
FIG. 27 is a block diagram illustrating a configuration of a repeater according to Embodiment 2 of this disclosure;
FIG. 28 is a diagram illustrating an internal configuration of a routing control section of the repeater according to Embodiment 2 of this disclosure;
FIG. 29 is a diagram illustrating an example of duty ratio correction processing of an intercom base unit according to Embodiment 2 of this disclosure;
FIG. 30 is a system configuration diagram illustrating a configuration of an intercom system according to Embodiment 3 of this disclosure;
FIG. 31 is a block diagram illustrating a configuration of an indoor monitoring base unit according to Embodiment 3 of this disclosure;
FIG. 32 is a block diagram illustrating a configuration of an entrance slave unit according to Embodiment 3 of this disclosure;
FIG. 33 is a block diagram illustrating an internal configuration of a cable connection section of the indoor monitoring base unit according to Embodiment 3 of this disclosure;
FIG. 34 is a block diagram illustrating an internal configuration of a cable connection section of the entrance slave unit according to Embodiment 3 of this disclosure;
FIG. 35 is a system configuration diagram illustrating a configuration of an intercom system according to the variation of Embodiment 3 of this disclosure; and
FIG. 36 is a diagram for describing time slot assignment in a basic communication frame according to a variation of Embodiment 3 of this disclosure.

### Description of Embodiments

Hereinafter, an embodiment of the present invention will be described with reference to the accompanying drawings.

### (Embodiment 1)

### <Overview of System>

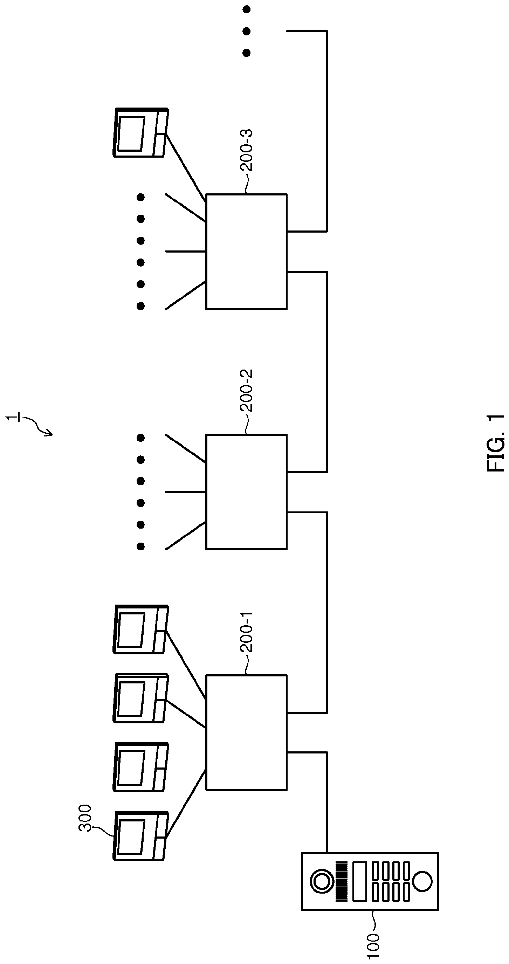

First, a description will be given of an overview of an intercom system according to Embodiment 1 of the present disclosure with reference to FIG. 1. As illustrated in FIG. 1, intercom system 1 includes lobby station 100, repeater 200, and indoor monitor 300. Lobby station 100 is an apparatus used by a visitor of a multiple dwelling to call a resident and is installed, for example, in a shared entrance (lobby) of the first floor of the building of the multiple dwelling. Repeater 200 is an apparatus which relays data between lobby station 100 and indoor monitor 300, and is installed, for example, in each floor of the building. Indoor monitor 300 is an apparatus for a resident to answer in response to the call from a visitor, and is installed in each room (or each dwelling unit).

Lobby station 100 is connected to one repeater 200-1 via a two-wire cable.

Repeaters 200 are connected to each other via two-wire cables, using daisy-chain-type wiring. More specifically, repeater 200-1 is connected to lobby station 100 of a preceding layer and to repeater 200-2 of a subsequent layer. Other repeaters 200-i ("i" is an integer greater than or equal to two) are connected to repeater 200-i-1 of a preceding layer and to repeater 200-i+1 of a subsequent layer. Moreover, each repeater 200 is connected to each of a plurality of indoor monitors 300 via a two-wire cable, using star-type wiring.

Lobby station 100 transmits a video signal and a speech signal to indoor monitor 300 which is a communication counterpart via repeater 200. Each indoor monitor 300 transmits a speech signal to lobby station 100 through repeater 200. Moreover, each indoor monitor 300 controls a camera of lobby station 100. Repeater 200 relays a signal transmitted and received between lobby station 100 and indoor monitor 300.

Note that, in the following description, the direction from lobby station 100 to indoor monitor 300 is referred to as "downlink (DL)," and a packet and a signal which are transmitted in the downlink (DL) are referred to as "DL packet" and "DL signal," respectively. Moreover, the direction from indoor monitor 300 to lobby station 100 is referred to as "uplink (UL)," and a packet and a signal which are transmitted in the uplink (UL) are referred to as "UL packet" and "UL signal," respectively.

### <Frame Configuration and Time Slot Configuration in Synchronization Communication>

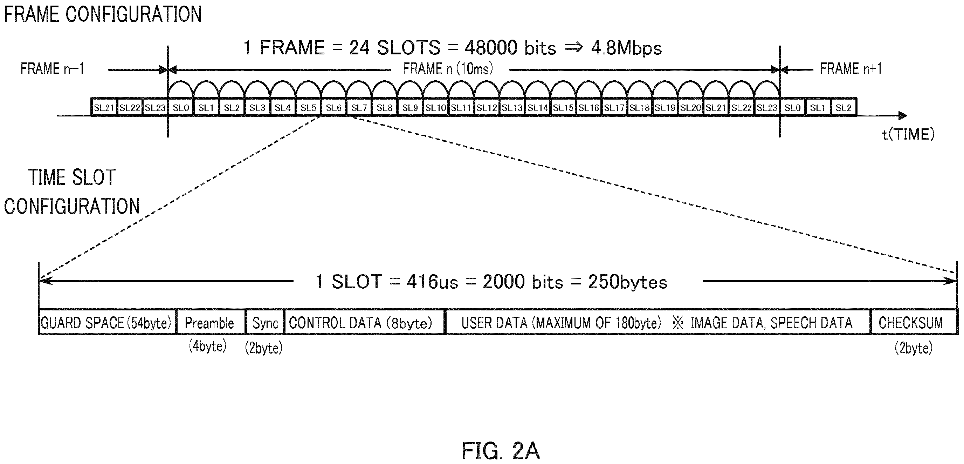

Next, a description will be given of a frame configuration and a time slot configuration at the time of synchronization communication according to Embodiment 1 with reference to FIG. 2A. As illustrated in FIG. 2A, each frame has a 48000-bit region with a cycle of 10 ms and a bit rate of 4.8 Mbps and is divided into 24 time slots. Thus, each time slot has 2000 bits = a 250-byte region with a cycle of 0.416 ms and a bit rate of 4.8 Mbps.

Each time slot is divided into a 54-byte guard space, a 4-byte preamble field (Preamble), a 2-byte synchronization field (Sync), an 8-byte control data field, a variable-length (maximum of 180 bytes) user data field, and a 2-byte checksum field.

The guard space is the time reserved for avoiding collision of a time slot due to a propagation delay time difference and/or a clock jitter, for example. The preamble data (to be described, hereinafter) which has a predetermined unique pattern is written into the preamble field.

A predetermined synchronization pattern is written in the synchronization field. The term "synchronization pattern" refers to known data or data sequence mapped to the synchronization field and used for establishing synchronization at the time of reception of received data. The synchronization pattern is a known data pattern previously defined for confirming that the received data has been received at accurate timing.

Control data is written into the control data field. User data (image data and/or speech data) is written into the user data field. A checksum which is a type of error detection code is written into the checksum field. In the following description, control data, user data and a checksum may be simply called "data portion." Note that, the configuration of the above-mentioned data portion is only an example, and the configuration may vary for reasons relating to signal processing.

### <Frame Format of Control Data>

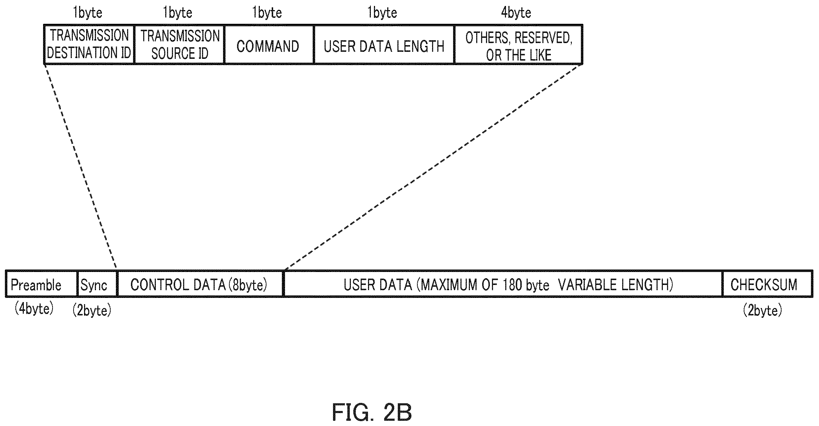

Next, a description will be given of a frame format of control data according to Embodiment 1 with reference to FIG. 2B.

As illustrated in FIG. 2B, the 8-byte control data field is divided into a 1-byte transmission destination ID field, a 1-byte transmission source ID field, a 1-byte command field, 1-byte user data length field, and a 4-byte additional control data field.

### <Configuration of Lobby Station>

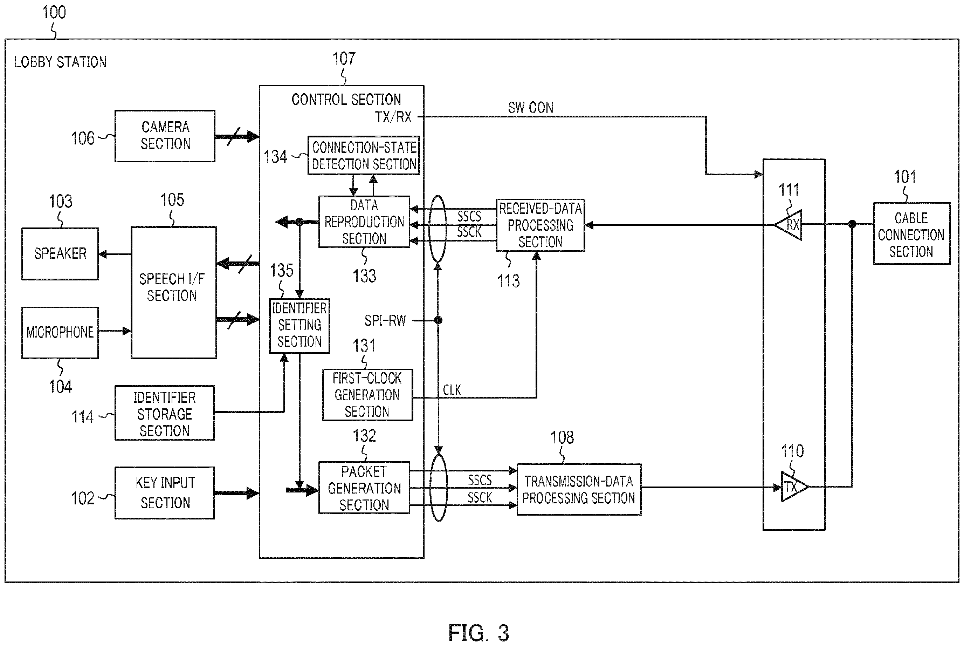

Next, a configuration of lobby station 100 will be described using a block diagram of FIG. 3. As illustrated in FIG. 3, lobby station 100 includes cable connection section 101, key input section 102, speaker 103, microphone 104, speech I/F section 105, camera section 106, and control section 107. Control section 107 includes therein first-clock generation section 131, packet generation section 132, data reproduction section 133, connection-state detection section 134, and identifier setting section 135. Moreover, lobby station 100 includes transmission-data processing section 108, transmission driver 110, reception driver 111, received-data processing section 113, and identifier storage section 114.

Cable connection section 101 includes a two-wire cable connection terminal and connects between one end of a two-wire cable, and transmission driver 110 and reception driver 111 in a signal transmittable state. Note that, the other end of the two-wire cable is connected to repeater 200 (repeater 200-1 in FIG. 1).

Key input section 102 includes a call button, and outputs, when the call button is operated, a signal indicating the operation of the call button to control section 107.

Speaker 103 switches analog speech data outputted from speech I/F section 105 into a speech and outputs the speech.

Microphone 104 collects speeches around microphone 104, then converts the speeches into analog speech data, and outputs the analog speech data to speech I/F section 105.

Speech I/F section 105 converts the digital speech data outputted from control section 107 into analog speech data, then adjusts a signal level of the analog speech data, and outputs the analog speech data to speaker 103. Moreover, speech I/F section 105 adjusts a signal level of the analog speech data outputted from microphone 104, then converts the analog speech data into digital speech data, and outputs the digital speech data to control section 107. The analog/digital conversion herein is performed by an A/D converter and/or a D/A converter (not illustrated).

Note that, speech I/F section 105 may output, to control section 107, as digital speech data, the data obtained by applying predetermined speech compression processing to the data resulting from digital conversion from the analog speech data outputted from microphone 104. Moreover, when the digital speech data outputted from control section 107 is the data obtained by applying the predetermined speech compression processing, speech I/F section 105 performs digital/analog conversion after applying predetermined speech decompression processing to the applicable data.

Camera section 106 includes a digital camera, captures video of an entrance, generates digital video data and outputs the digital video data to control section 107. Note that, camera section 106 may include an encoder module. That is, camera section 106 may output, to control section 107, as digital video data, the data obtained by applying predetermined video compression processing, such as H.264, to the video data outputted from the digital camera.

Control section 107 controls each section of lobby station 100. Moreover, control section 107 outputs a switching control signal (SW CON) indicating, to transmission driver 110 and reception driver 111, a transmitting section where transmission is permitted and a receiving section where reception is permitted.

First-clock generation section 131 of control section 107 generates a clock (CLK) which is used for sampling received data and which has a first frequency (e.g., 48MHz) corresponding to n times (where n = 10) the bit rate of the received data, with refenrece to crystal oscillation, and outputs the clock (hereinafter, may be referred to as "first frequency clock") to received-data processing section 113.

Packet generation section 132 of control section 107 generates a DL packet for realizing a video phone call. More specifically, packet generation section 132 divides as appropriate the digital speech data outputted from speech I/F section 105 and the digital video data outputted from camera section 106 and writes the data into the user data field of each time slot, and writes, into the control data field of each time slot, control data including a transmission source ID which is an ID (unique identifier) of lobby station 100 and a transmission destination ID which is an ID of indoor monitor 300 which is the communication counterpart. Furthermore, packet generation section 132 writes preamble data and a synchronization pattern into each time slot and generates a DL packet (transmission data). Packet generation section 132 generates a transmission enabling signal (SSCS) and a clock of a second frequency (e.g., 4.8MHz) (SSCK) for transmission. Packet generation section 132 synchronizes the DL packet with the transmission enabling signal (SSCS) and the clock (SSCK) (hereinafter, may be referred to as "second frequency clock") and outputs the resultant data to transmission-data processing section 108.

Note that, in a standby state (state where the time slot of a control channel operates as a beacon), in which the communication with repeater 200 (or indoor monitor 300) is kept in the frame synchronization, when a predetermined event, such as an operation of the call button, occurs, packet generation section 132 writes required data into a predetermined time slot in a synchronization frame and generates a DL packet.

Upon input of the enabling signal (SSCS) from received-data processing section 113, data reproduction section 133 of control section 107 uses the second frequency clock (SSCK) outputted from received-data processing section 113 and obtaines a UL packet (decoded data) outputted from received-data processing section 113.

Data reproduction section 133 outputs the synchronization pattern included in the UL packet to connection-state detection section 134. When the two-wire cable is determined to be in normal connection by connection-state detection section 134, data reproduction section 133 performs post-processing, such as error detection processing, extraction processing and/or the like, while leaving the data portion (control data, user data, and checksum) subsequent to the synchronization pattern unchanged. Meanwhile, when the two-wire cable is determined to be in reverse connection by connection-state detection section 134, data reproduction section 133 inverts the data portion subsequent to the synchronization pattern and performs post-processing, such as error detection processing, extraction processing, and/or the like.

Data reproduction section 133 extracts the digital speech data included in the UL packet and outputs the digital speech data to speech I/F section 105. Moreover, data reproduction section 133 extracts ID information of the control data included in the UL packet and outputs the ID information to identifier setting section 135.

Connection-state detection section 134 of control section 107 stores a synchronization pattern for checking when a two-wire cable is in normal connection (hereinfater, referred to as "normal-connection check synchronization pattern") (e.g., 16 bits are all "0") and a synchronization pattern which is a pattern reverse to the normal connection check synchronization pattern and is used for checking when a two-wire cable is in reverse connection (hereinfater, referred to as "reverse-connection check synchronization pattern") (e.g., 16 bits are all "1"). Connection-state detection section 134 compares the synchronization pattern of the received data outputted from data reproduction section 133 with the normal-connection check synchronization pattern and the reverse-connection check synchronization pattern. Connection-state detection section 134 determines that the two-wire cable is in normal connection, when the synchronization pattern of the received data completely coincides with the normal-connection check synchronization pattern, whereas connection-state detection section 134 determines that the two-wire cable is in reverse connection, when the synchronization pattern of the received data completely coincides with the reverse-connection check synchronization pattern. Connection-state detection section 134 outputs a signal indicating the result of determination to data reproduction section 133.

Identifier setting section 135 of control section 107 reads, from identifier storage section 114, the ID of lobby station 100 as the transmission source ID and the ID of indoor monitor 300 which is the communication counterpart as the transmission destination ID, and outputs the transmission source ID and transmission destination ID to packet generation section 132. Moreover, identifier setting section 135 compares the transmission destination ID included in the DL packet outputted from data reproduction section 133 with the ID of lobby station 100 stored in identifier storage section 114 and discards the DL packet when the IDs do not coincide with each other.

Upon input of an enabling signal (SSCS) from packet generation section 132, transmission-data processing section 108 uses the second frequency clock (SSCK) outputted from packet generation section 132 and applies modulation processing to the data of the DL packet outputted from packet generation section 132 to generate a DL signal, and outputs the DL signal to transmission driver 110. Note that, the details (specific example) of the modulation processing to be applied by transmission-data processing section 108 will be given, hereinafter.

Transmission driver 110 transmits the DL signal to repeater 200 through cable connection section 101 in the transmitting section indicated by the switching control signal (SW CON) from control section 107.

Reception driver 111 receives a UL signal transmitted from repeater 200 through cable connection section 101. Reception driver 111 outputs the UL signal to received-data processing section 113 in the receiving section indicated by the switching control signal (SW CON) from control section 107.

Received-data processing section 113 uses the first frequency clock (CLK) outputted from first-clock generation section 131 and detects the timing of the first bit of a synchronization pattern on the time slot of the received data (synchronization timing with lobby station 100), using the preamble data included in the UL signal outputted from reception driver 111. Received-data processing section 113 outputs, at the timing at which the unique pattern of the preamble data is detected, the enabling signal (SSCS) permitting a data reproduction operation to data reproduction section 133.

Moreover, received-data processing section 113 decodes the UL signal (received data) outputted from reception driver 111 and outputs decoded data to data reproduction section 133. Moreover, received-data processing section 113 generates a clock (SSCK) of a second frequency (e.g., 4.8 MHz) corresponding to the bit rate of the received data, with reference to the first frequency clock (CLK) outputted from first-clock generation section 131, and outputs the clock to data reproduction section 133. Note that, the details of the configuration of received-data processing section 113 will be given, hereinafter.

Identifier storage section 114 is a nonvolatile storage section and stores the ID of lobby station 100, the ID of each repeater 200 and the ID of each indoor monitor 300. Note that, the ID of each indoor monitor 300 is beforehand set at the time of a manufacturing process or installation not to overlap with another ID. Moreover, the ID of each repeater 200 is likewise set beforehand at the time of a manufacturing process or installation not to overlap with another ID. Moreover, when the call button of key input section 102 of lobby station 100 is a direct button, identifier storage section 114 stores the number of each button and the ID of indoor monitor 300 corresponding to the button in association with each other. When 15 indoor monitors 300 are installed, for example, "#0" is assigned to the ID of lobby station 100 and the numbers "#1" to "#15" are assigned respectively to the IDs of indoor monitors 300. The IDs ("#1" to "#15") of the transmission destinations (indoor monitors 300) are assigned respectively to the 15 direct buttons of lobby station 100. Thus, the IDs "#1" to "#15" of indoor monitors 300 and the direct buttons are associated with each other.

Note that, lobby station 100 can simultaneously transmit (broadcast) image data and speech data to all indoor monitors 300 (e.g., emergency communication). In this case, lobby station 100 specifies broadcasting transmission by a method of setting all transmission destination IDs of a slot to "1," for example. In this case, a measure, such as, simultaneously pressing all the call buttons of key input section 102, is taken for preventing an erroneous call.

Moreover, it is also possible to monitor a camera image of lobby station 100 from each indoor monitor 300. In this case, the camera image of lobby station 100 can be monitored for a certain period of time by an operation to press a "monitor" key of indoor monitor 300. Monitoring of the camera image by single indoor monitor 300 is basically performed on a first-come first served basis (priority is given to indoor monitor in which the button is pressed first), but it is also possible to allow a plurality of indoor monitors 300 to monitor a camera image of lobby station 100 at a time by assigning a reserved slot in a synchronization frame to a monitoring function of another indoor monitor 300 and allowing for indicating a plurality of transmission destination IDs of a control channel in the synchronization frame and managing each monitoring time.

### <Configuration of Repeater>

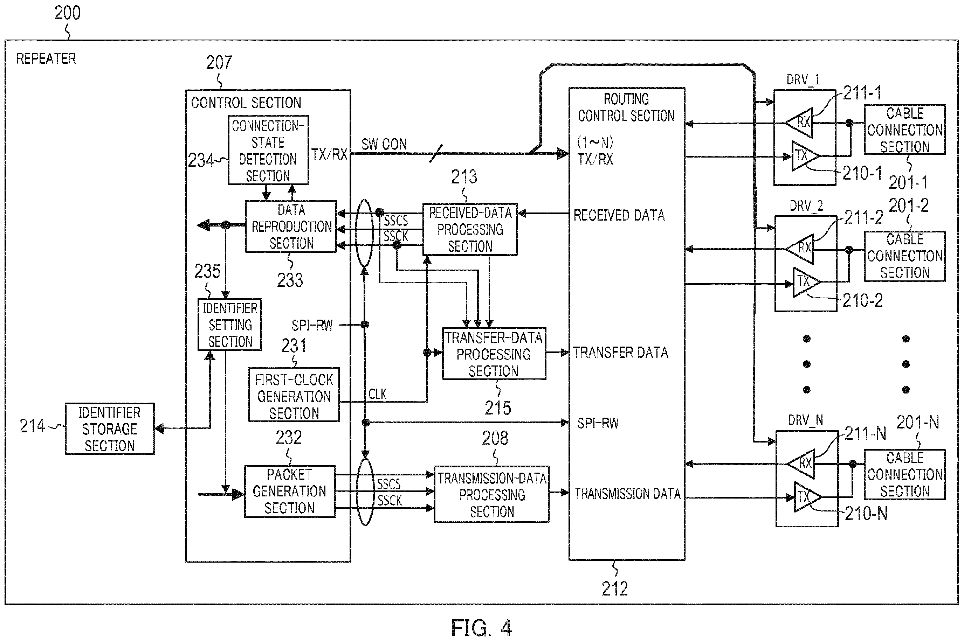

Next, a configuration of repeater 200 will be described using a block diagram of FIG. 4. As illustrated in FIG. 4, repeater 200 includes cable connection section 201 and control section 207. Control section 207 includes therein first-clock generation section 231, packet generation section 232, data reproduction section 233, connection-state detection section 234, and identifier setting section 235. Moreover, repeater 200 includes transmission-data processing section 208, transmission driver 210, reception driver 211 and routing control section 212, received-data processing section 213, identifier storage section 214, and transfer-data processing section 215. Note that, repeater 200 includes N ("N" is a natural number) cable connection section(s) 201, transmission driver(s) 210, and reception driver(s) 211.

Cable connection section 201-i ("i" is an integer from 1 to N) includes a two-wire cable connection terminal and connects between one end of a two-wire cable, and transmission driver 210-i and reception driver 211-i in a signal transmittable state. Note that, the other end of the two-wire cable is connected to lobby station 100, indoor monitor 300, or another repeater 200.

Control section 207 controls each section of repeater 200. Moreover, control section 207 outputs a switching control signal (SW CON) indicating a transmitting section where transmission is permitted and a receiving section where reception is permitted to each transmission driver 210-i, each reception driver 211-i, and routing control section 212.

First-clock generation section 231 of control section 207 generates a clock (CLK) which is used for sampling received data and which has a first frequency (e.g., 48MHz) corresponding to n times (where n = 10) the bit rate of the received data, with reference to crystal oscillation, and outputs the clock (hereinafter, may be referred to as "first frequency clock") to received-data processing section 213 and transfer-data processing section 215.

Packet generation section 232 of control section 207 generates a DL packet or UL packet for a command request or an acknowledgment response to a command request. Packet generation section 232 generates a transmission enabling signal (SSCS) and a clock of a second frequency (e.g., 4.8MHz) (SSCK) for transmission. Packet generation section 232 synchronizes the DL packet or UL packet with the transmission enabling signal (SSCS) and the clock (SSCK) (hereinafter, may be referred to as "second frequency clock") and outputs the resultant data to transmission-data processing section 208.

Upon input of the enabling signal (SSCS) from received-data processing section 213, data reproduction section 233 of control section 207 uses the second frequency clock (SSCK) outputted from received-data processing section 213 and obtaines a LTL packet or DL packet outputted from received-data processing section 213.

Data reproduction section 233 outputs the synchronization pattern included in the UL packet or DL packet to connection-state detection section 234. When the two-wire cable is determined to be in normal connection by connection-state detection section 234, data reproduction section 233 performs post-processing, such as error detection processing, extraction processing and/or the like, while leaving the data portion (control data, user data, and checksum) subsequent to the synchronization pattern unchanged. Meanwhile, when the two-wire cable is determined to be in reverse connection by connection-state detection section 234, data reproduction section 233 inverts the data portion subsequent to the synchronization pattern and performs post-processing, such as error detection processing, extraction processing, and/or the like.

Data reproduction section 233 extracts ID information of the control data included in the UL packet or DL packet and outputs the ID information to identifier setting section 235.

Connection-state detection section 234 of control section 207 stores a normal-connection check synchronization pattern and a reverse-connection check synchronization pattern, compares the synchronization pattern of the received data outputted from data reproduction section 233 with the normal-connection check synchronization pattern and the reverse-connection check synchronization pattern. Connection-state detection section 234 determines that the two-wire cable is in normal connection, when the synchronization pattern of the received data completely coincides with the normal-connection check synchronization pattern, whereas connection-state detection section 234 determines that the two-wire cable is in reverse connection, when the synchronization pattern of the received data completely coincides with the reverse-connection check synchronization pattern. Connection-state detection section 234 outputs a signal indicating the result of determination to data reproduction section 233.

Identifier setting section 235 of control section 207 compares the transmission destination ID included in the UL packet or DL packet outputted from data reproduction section 233 with the ID stored in identifier storage section 214. Control section 207 receives the packet and performs a corresponding operation when the transmission destination ID coincides with the ID of repeater 200 in identifier setting section 235. Meanwhlile, control section 207 disregards the DL packet when the transmission destination ID does not coincide with the ID of repeater 200 in identifier setting section 235.

Upon input of an enabling signal (SSCS) from packet generation section 232, transmission-data processing section 208 uses the second frequency clock (SSCK) outputted from packet generation section 232 and applies modulation processing to the data of the DL packet or UL packet outputted from packet generation section 232 to generate a DL signal or UL signal, and outputs the DL signal or UL signal to routing control section 212.

Transmission driver 210-i transmits, through cable connection section 201-i, the DL signal or UL signal to lobby station 100, another repeater 200 connected to repeater 200, or indoor monitor 300 in the transmitting section indicated by the switching control signal (SW CON) from control section 207.

Reception driver 211-i receives, through cable connection section 201-i, a DL signal or UL signal transmitted from lobby station 100, another repeater 200 connected to repeater 200, or indoor monitor 300. Reception driver 211-i outputs the DL siganl or UL signal to routing control section 212 in the receiving section indicated by the switching control signal (SW CON) from control section 207.

Routing control section 212 outputs, to received-data processing section 213, the DL signal or UL signal transmitted from lobby station 100, another repeater 200 connected to repeater 200, or indoor monitor 300, and outputted from reception driver 211-i. Routing control section 212 outputs, in accordance with an instruction of identifier setting section 235, the DL signal or UL signal outputted from transmission-data processing section 208 and transfer-data processing section 215 to a corresponding one or more of transmission driver(s) 210-j ("j" is an integer from 1 to N). Note that, the details of a specific example of routing control performed by routing control section 212 will be given, hereinafter

Received-data processing section 213 uses the first frequency clock (CLK) outputted from first-clock generation section 231 and detects a first bit timing of a synchronization pattern on a time slot of the received data received data (synchronization timing with lobby station 100), using the preamble data included in the DL signal outputted from routing control section 212. Received-data processing section 213 outputs, at the timing at which the the unique pattern of the preamble data is detected, the enabling signal (SSCS) permitting a data reproduction operation to data reproduction section 233. Furthermore, received-data processing section 213 outputs a detection indication of the detected unique pattern to transfer-data processing section 215.

Moreover, received-data processing section 213 decodes the DL signal (received data) outputted from routing control section 212 and outputs the decoded data to data reproduction section 233 and transfer-data processing section 215. Moreover, received-data processing section 213 generates a clock (SSCK) of a second frequency (e.g., 4.8 MHz) corresponding to the bit rate of the received data, with reference to the first frequency clock (CLK) outputted from first-clock generation section 231, and outputs the clock to data reproduction section 233 and and transfer-data processing section 215.

Identifier storage section 214 stores the identifier of lobby station 100, the identifier of another repeater 200 connected to repeater 200, and the identifier of indoor monitor 300 connected to repeater 200.

Transfer-data processing section 215 newly generates preamble data and combines the newly generated preamble data with the decoded data outputted from received-data processing section 213, applies encoding processing again to the resultant data to genereate transfer-data, and outputs the transfer-data to routing control section 212. Note that, the details of the internal configuration of transfer-data processing section 215 will be given, hereinafter.

### <Configuration of Indoor Monitor>

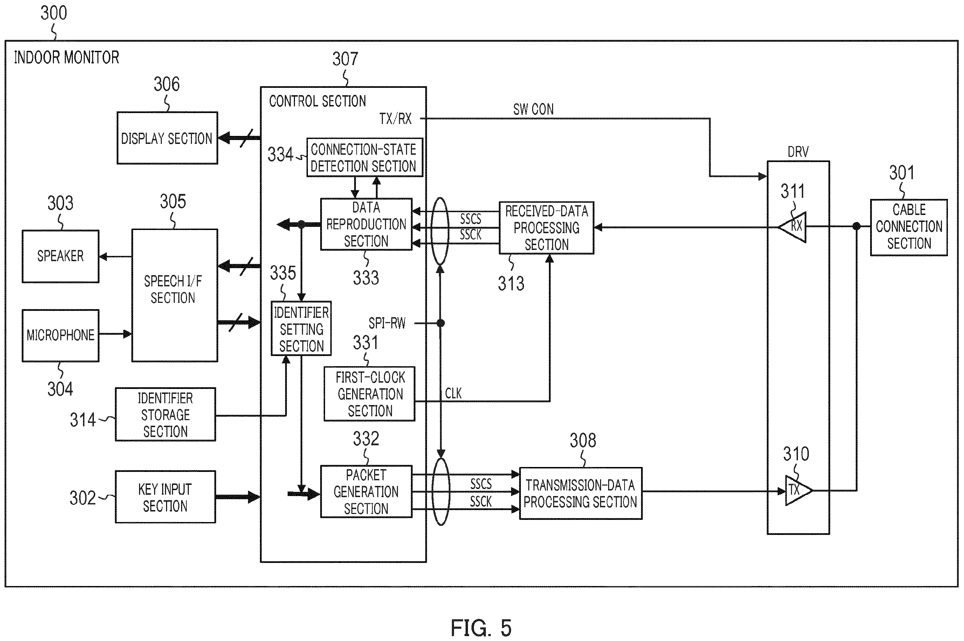

Next, a configuration of indoor monitor 300 will be described using a block diagram of FIG. 5. As illustrated in FIG. 5, indoor monitor 300 includes cable connection section 301, key input section 302, speaker 303, microphone 304, speech I/F (interface) section 305, display section 306, and control section 307. Control section 307 includes therein first-clock generation section 331, packet generation section 332, data reproduction section 333, connection-state detection section 334, and identifier setting section 335. Moreover, indoor monitor 300 includes transmission-data processing section 308, transmission driver 310, reception driver 311, received-data processing section 313, and identifier storage section 314.

Cable connection section 301 includes a two-wire cable connection terminal and connects between one end of a two-wire cable, and reception driver 311 and transmission driver 310 in a signal transmittable state. Note that, the other end of the two-wire cable is connected to repeater 200.

Key input section 302 includes a response button, and outputs, when the response button is operated, a signal indicating the operation of the response button to control section 307.

Speaker 303 converts analog speech data outputted from speech I/F section 305 into a speech and outputs the speech.

Microphone 304 collects speeches around microphone 304, then converts the speeches into analog speech data, and outputs the analog speech data to speech I/F section 305.

Speech I/F section 305 converts the digital speech data outputted from control section 307 into analog speech data, then adjusts a signal level of the analog speech data, and outputs the analog speech data to speaker 303. Moreover, speech I/F section 305 adjusts a signal level of the analog speech data outputted from microphone 304, then converts the analog speech data into digital speech data, and outputs the digital speech data to control section 307. The analog/digital conversion herein is performed by an A/D converter and/or a D/A converter (not illustrated).

Note that, speech I/F section 305 may output, to control section 307 as digital speech data, the data obtained by applying predetermined speech compression processing to the data resulting from digital conversion from the analog speech data outputted from microphone 304. Moreover, when the digital speech data outputted from control section 307 is the data obtained by applying the predetermined speech compression processing, speech I/F section 305 performs digital/analog conversion after applying predetermined speech decompression processing to the applicable data.

Display section 306 includes a liquid crystal display, reproduces digital video data outputted from control section 307, and displays the video of the entrance. Note that, in a case where the digital video data outputted from control section 307 is the data obtained by performing predetermined video compression processing, predetermined video decompression processing is applied to the data, and the video is displayed.

Control section 307 controls each section of indoor monitor 300. Moreover, control section 307 outputs a switching control signal (SW CON) indicating, to transmission driver 310 and reception driver 311, a transmitting section where transmission is permitted and a receiving section where reception is permitted.

First-clock generation section 331 of control section 307 generates a clock (CLK) which is used for sampling received data and which has a first frequency (e.g., 48MHz) corresponding to n times (where n = 10) the bit rate of received data, with refenrece to crystal oscillation, and outputs the clock (hereinafter, may be referred to as "first frequency clock") to received-data processing section 313.

Packet generation section 332 of control section 307 generates a DL packet for realizing a video phone call. More specifically, packet generation section 332 divides as appropriate the digital speech data outputted from speech I/F section 305 and writes the data into the user data field of each time slot, and writes, into the control data field of each time slot, control data including a transmission source ID which is an identifier unique to indoor monitor 300 and a transmission destination ID which is an identifier unique to lobby station 100. Furthermore, packet generation section 332 writes preamble data and a synchronization pattern into each time slot and generates a UL packet (transmission data). Packet generation section 332 generates a transmission enabling signal (SSCS) and a clock of a second frequency (e.g., 4.8MHz) for transmission (SSCK). Packet generation section 332 synchronizes the UL packet with the transmission enabling signal (SSCS) and clock (SSCK) (hereinafter, may be referred to as "second frequency clock") and outputs the resultant data to transmission-data processing section 308.

Note that, in the standby state (state where the time slot of a control channel operates as a beacon), in which the communication with repeater 200 is kept in the frame synchronization, when a predetermined event, such as an operation of the call button, occurs, packet generation section 332 writes required data into a predetermined time slot in a synchronization frame and generates a UL packet.

Upon input of the enabling signal (SSCS) from received-data processing section 313, data reproduction section 333 of control section 307 uses the second frequency clock (SSCK) outputted from received-data processing section 313 and obtains a DL packet (decoded data) outputted from received-data processing section 313. Data reproduction section 333 outputs the digital video data included in the decoded data to display section 306 while outputting the digital speech data included in the DL packet to speech I/F section 305 and outputting the synchronization pattern included in the DL packet to connection-state detection section 334.

Data reproduction section 333 outputs the synchronization pattern included in the DL packet to connection-state detection section 334. When the two-wire cable is determined to be in normal connection by connection-state detection section 334, data reproduction section 333 performs post-processing, such as error detection processing, extraction processing, and/or the like, while leaving the data portion (control data, user data, and checksum) subsequent to the synchronization pattern unchanged. Meanwhile, when the two-wire cable is determined to be in reverse connection by connection-state detection section 334, data reproduction section 333 inverts the data portion subsequent to the synchronization pattern and performs post-processing, such as error detection processing, extraction processing, and/or the like.

Data reproduction section 333 outputs the digital video data included in the DL packet to display section 306 and outputs the digital speech data included in the DL packet to speech I/F section 305. Moreover, data reproduction section 333 extracts ID information of the control data included in the DL packet and outputs the ID information to identifier setting section 335.

Connection-state detection section 334 of control section 307 stores a normal-connection check synchronization pattern and a reverse-connection check synchronization pattern. Connection-state detection section 334 compares the synchronization pattern of the received data outputted from data reproduction section 333 with the normal-connection check synchronization pattern and the reverse-connection check synchronization pattern. Connection-state detection section 334 determines that the two-wire cable is in normal connection, when the synchronization pattern of the received data completely coincides with the normal-connection check synchronization pattern, whereas connection-state detection section 334 determines that the two-wire cable is in reverse connection, when the synchronization pattern of the received data completely coincides with the reverse-connection check synchronization pattern. Connection-state detection section 334 outputs a signal indicating the result of determination to data reproduction section 333.

Identifier setting section 335 of control section 307 reads, from identifier storage section 314, the ID of indoor monitor 300 as the transmission source ID, reads the ID of lobby station 100 which is the communication counterpart, as the transmission destination ID, and outputs the transmission source ID and transmission destination ID to packet generation section 332. Moreover, identifier setting section 335 compares the transmission destination ID included in the DL packet outputted from data reproduction section 333 with the transmission destination ID of indoor monitor 300 stored in identifier storage section 314, and when the IDs do not coincide with each other, identifier setting section 335 discards the DL packet.

Upon input of the enabling signal (SSCS) from packet generation section 332, transmission-data processing section 308 uses the clock of the second frequency (SSCK) outputted from packet generation section 332 and applies modulation processing to the data of the UL packet outputted from packet generation section 332 to generate a UL signal, and outputs the UL signal to transmission driver 310.

Transmission driver 310 transmits the UL signal to repeater 200 through cable connection section 301 in the transmitting section indicated by the switching control signal (SW CON) from control section 307.

Reception driver 311 receives a DL signal transmitted from repeater 200 through cable connection section 301. Reception driver 311 outputs the DL signal to received-data processing section 313 in the receiving section indicated by the switching control signal (SW CON) from control section 307.

Received-data processing section 313 uses the first frequency clock (CLK) outputted from first-clock generation section 331 and detects the timing of the first bit of a synchronization pattern on the time slot of the received data (synchronization timing with repeater 200), using the preamble data included in the DL signal outputted from reception driver 311. Received-data processing section 313 outputs, at the timing at which the the unique pattern of the preamble data is detected, the enabling signal (SSCS) permitting a data reproduction operation to data reproduction section 333.

Moreover, received-data processing section 313 decodes the DL signal (received data) outputted from reception driver 311 and outputs the decoded data to data reproduction section 333. Moreover, received-data processing section 313 generates a clock (SSCK) of a second frequency (e.g., 4.8 MHz) corresponding to the bit rate of the received data, with reference to the first frequency clock (CLK) outputted from first-clock generation section 331, and outputs the clock (hereinafter, may be referred to as "second frequency clock") to data reproduction section 333.

Identifier storage section 314 stores the identifier of lobby station 100, the identifier of repeater 200 connected to indoor monitor 300, and the identifier of indoor monitor 300.

Note that, lobby station 100, repeater 200, and indoor monitor 300, each include, for example, a central processing unit (CPU), a storage medium, such as a read only memory (ROM), in which a control program is stored, a working memory, such as a random access memory (RAM), and a communication circuit. In this case, the function of each of the sections described above is realized when the CPU executes a control program.

### <Example of Modulation Processing>

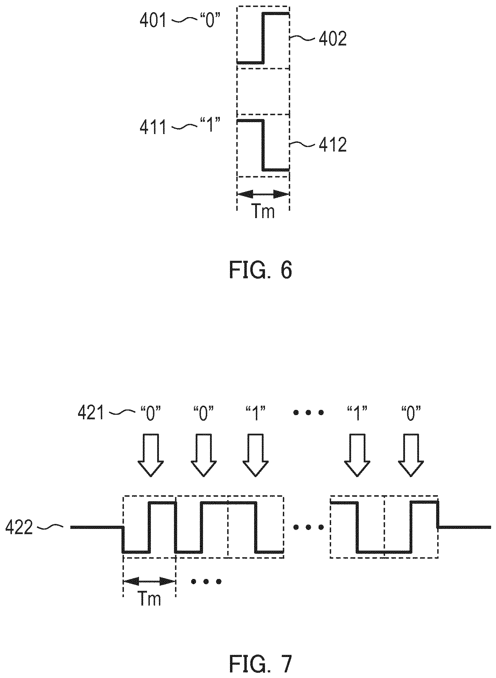

Next, an example of the modulation processing performed by transmission-data processing section 108 (208, 308) will be described using FIG. 6 and FIG. 7. FIGS. 6 and 7 illustrate the case where Manchester coding is adopted.

Transmission-data processing section 108 (208, 308) generates one signal corresponding to each data (1 bit) of a packet for every cycle Tm. When Manchester coding is adopted, as illustrated in FIG. 6, transmission-data processing section 108 (208, 308) causes rising from Low to High in data 401 of value "0" to generate modulation signal 402. Moreover, transmission-data processing section 108 (208, 308) generates falling from High to Low in data 411 of value "1" to generate modulation signal 412.

As illustrated in FIG. 7, transmission-data processing section 108 (208, 308) generates modulation signal 422 having rising or falling for every cycle Tm for the value of each bit with respect to data string 421, namely, "0, 0, 1, ..., 1, 0."

### <Example of Preamble Data>

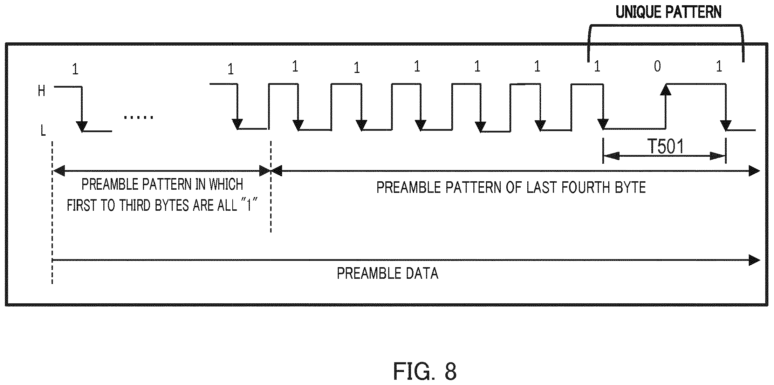

Next, an example of preamble data used in Embodiment 1 will be described using FIG. 8.

As illustrated in FIG. 8, the preamble data (4 bytes = 32 bits) used in this embodiment has a pattern in which bits from the first byte to the third byte are all "1" and the fourth byte includes the first to the sixth bits equal to "1," the seventh bit equal to "0," and the eighth bit (last one bit) equal to "1." Furthermore, the first bit of the synchronization pattern which follows the preamble data in this case is equal to "1." As a result, the preamble data illustrated in FIG. 8 has a unique pattern in which the period between adjacent falling edges T501 from the sixth bit to the eighth bit of the fourth byte is longer than other periods. Moreover, a High (H) period and a Low (L) period between adjacent falling edges T501 are longer than other periods. Note that, FIG. 8 illustrates the waveform of the preamble data after Manchester coding.

Note that, in this embodiment, the preamble data may be the preamble data obtained by inverting the preamble data illustrated in FIG. 8. That is, the preamble data (4 bytes = 32 bits) used in this embodiment may have a pattern in which bits from the first byte to the third byte are all "0," and the fourth byte includes the first to the sixth bits equal to "0," the seventh bit equal to "1" and the eighth bit (last one bit) equal to "0." In this case, the first bit of the synchronization pattern which follows the preamble data in this case is "0."

### <Internal Configuration of Received-Data Processing Section>

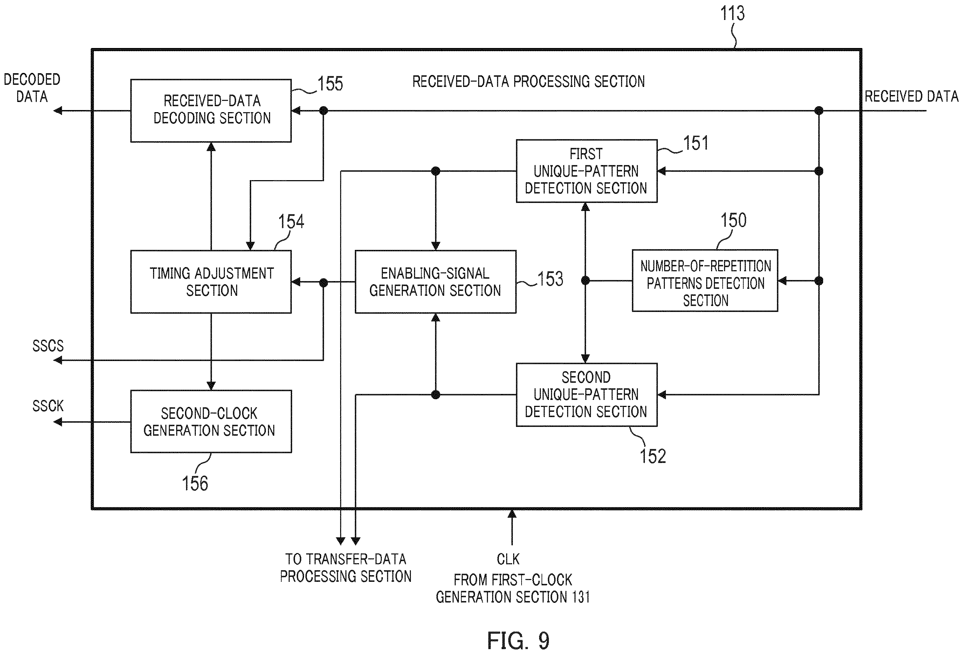

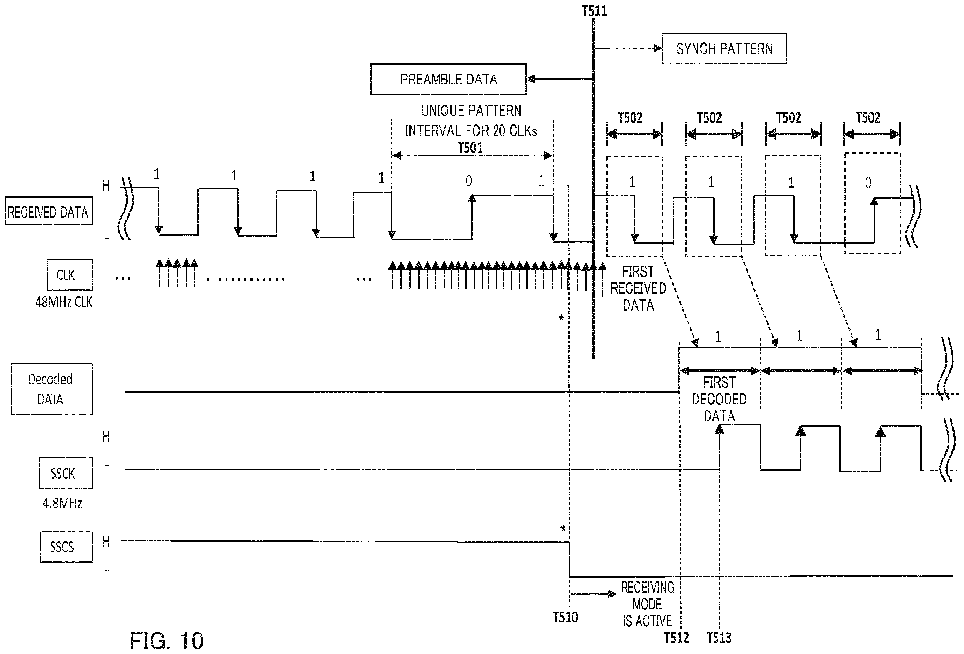

Next, the details of the internal configuration of received-data processing section 113 of lobby station 100 will be given using FIG. 9. Note that, in order to facilitate understanding of synchronization detection processing of this embodiment, FIG. 10 is used with FIG. 9 for describing the processing. In an example of FIG. 10, the preamble data and the unique pattern illustrated in FIG. 8 are used. That is, the preamble data in this example has a pattern in which bits from the first byte to the third byte are all "1" and the fourth byte includes the first to the sixth bits equal to "1," the seventh bit equal to "0," and the eighth bit (last one bit) equal to "1." Note that, FIG. 10 illustrates a case where first-clock generation section 131 generates a 48 MHz clock (CLK), and second-clock generation section 156 generates a 4.8 MHz clock (SSCK).

As illustrated in FIG. 9, received-data processing section 113 includes number-of-repetition patterns detection section 150, first unique-pattern detection section 151, second unique-pattern detection section 152, enabling-signal generation section 153, timing adjustment section 154, received-data decoding section 155, and second-clock generation section 156.

The received data outputted from reception driver 111 is inputted to number-of-repetition patterns detection section 150, first unique-pattern detection section 151, second unique-pattern detection section 152, timing adjustment section 154, and received-data decoding section 155. The clock (CLK) of first-clock generation section 131 is inputted to first unique-pattern detection section 151, second unique-pattern detection section 152, timing adjustment section 154, received-data decoding section 155, and second-clock generation section 156.

Number-of-repetition patterns detection section 150 stores a second prescribed number of clocks for detection between adjacent falling edges (or adjacent rising edges) (e.g., from "8" "to "12") other than a unique pattern and a third prescribed number of clocks for repetition pattern detection (e.g., "16"). Number-of-repetition patterns detection section 150 counts clocks between adjacent falling edges (or adjacent rising edges) of a preamble waveform by the first counter, and when the number of clocks coincides with any number in the second-prescribed number of clocks, number-of-repetition patterns detection section 150 counts up the second counter. When the count value of the second counter reaches a third prescribed number of clocks, number-of-repetition patterns detection section 150 outputs a trigger signal indicating the start of operation to first and second unique-pattern detection sections 151 and 152.

First and second unique-pattern detection sections 151 and 152 each store the first prescribed number of clocks for unique pattern detection (e.g., "18" to "22").

Upon input of a trigger signal from number-of-repetition patterns detection section 150, first unique-pattern detection section 151 samples the preamble data included in the received data outputted from reception driver 111, with the clocks of first-clock generation section 131, and counts clocks between adjacent falling edges. When the number of clocks between adjacent rising edges coincides with any number in the first prescribed number of clocks, first unique-pattern detection section 151 determines that a unique pattern has been detected. In the example of FIG. 10, the number of clocks between adjacent falling edges T501 "20" coincides with one number in the first prescribed number of clocks. First unique-pattern detection section 151 outputs, at a predetermined timing, a signal indicating the result of detection to enabling-signal generation section 153. Note that, in a device including a transfer-data processing section (see FIG. 4), first unique-pattern detection section 151 outputs the signal indicating that the unique pattern has been detected also to the transfer-data processing section.

Upon input of a trigger signal from number-of-repetition patterns detection section 150, second unique-pattern detection section 152 samples, at the same timing as first unique-pattern detection section 151, the preamble data included in the received data outputted from reception driver 111 and counts clocks between adjacent rising edges. When the number of clocks between the adjacent rising edges coincides with any number in the first prescribed number of clocks, second unique-pattern detection section 152 determines that a unique pattern has been detected, and outputs a signal indicating the result of detection to enabling-signal generation section 153. Note that, in a device including a transfer-data processing section (see FIG. 4), second unique-pattern detection section 152 outputs the signal indicating that the unique pattern has been detected also to the transfer-data processing section.

Upon input of the signal indicating that a unique pattern has been detected from first or second unique-pattern detection section 151 or 152 (timing T510 of FIG. 10), enabling-signal generation section 153 outputs an enabling signal permitting a data reproduction operation to timing adjustment section 154 and data reproduction section 133 (enabling signal SSCS is set to "falling," i.e., L (Low) signal (activated) in the example of FIG. 10).

Timing adjustment section 154 includes therein a timing generation counter, and upon input of an enabling signal from enabling-signal generation section 153, timing adjustment section 154 detects a waveform edge of first received data (first bit of synchronization pattern). Note that, the first received data starts from timing T511 of the data inversion which is a waveform edge between the preamble data and thesynchronization pattern.

After detecting the waveform edge, timing adjustment section 154 performs counting by the timing generation counter using the first frequency clock and observes the counter value at the timing of the waveform edge of each received data. In a case where the counter value differs from a normal value, timing adjustment section 154 corrects the counter value and outputs the corrected counter value to received-data decoding section 155 and second-clock generation section 156. Thus, the start timing of the range of the data reproduction window which is a range (time T502 of FIG. 10) where the counter value becomes a predetermined value is adjusted. Note that, the details of the correction processing for counter values to be performed by timing adjustment section 154 will be given, hereinafter.

Received-data decoding section 155 receives a counter value from timing adjustment section 154, scan detects logical inversion of a waveform for 1 bit of received data in the range of a data reproduction window (time T502 of FIG. 10), and applies decoding processing of the data corresponding to logical inversion of the Manchester encoded waveform for the 1 bit of the received data, and outputs the decoded data to data reproduction section 133. In the example of FIG. 10, in time T502, received-data decoding section 155 outputs decoded data "1" when the waveform is inverted from "H" to "L," and outputs decoded data "0" when the waveform is inverted from "L" to "H." The decoded data of the first received data is outputted from received-data decoding section 155 with constant delay at almost the same time as the time the second received data is inputted to received-data decoding section 155. Note that, the details of the decoding processing of received data to be performed by received-data decoding section 155 will be given, hereinafter.

Second-clock generation section 156 receives a counter value from timing adjustment section 154, starts outputting of SSCK (FIG. 10 "L") with the counter value "0" (timing T512 of FIG. 10) of the second received data, inverses the logic of SSCK for the first decoded data after constant delay from "L" to "H" and inverses the logic of SSCK of a boundary between the first decoded data and the second decoded data with the counter value "0" of the second received data from "H" to "L." Then, second-clock generation section 156 repeats the logical inversion from "H" to "L" with count value "0" and the logical inversion from "L" to "H" with count value "5" for the reproduction clock SSCK. Second-clock generation section 156 outputs the second frequency (e.g., 4.8 MHz) clock (SSCK) to data reproduction section 133 at the timing at which the logical inversion from "L" to "H" is performed.

### <Detailed Description of Detection of Unique Pattern>

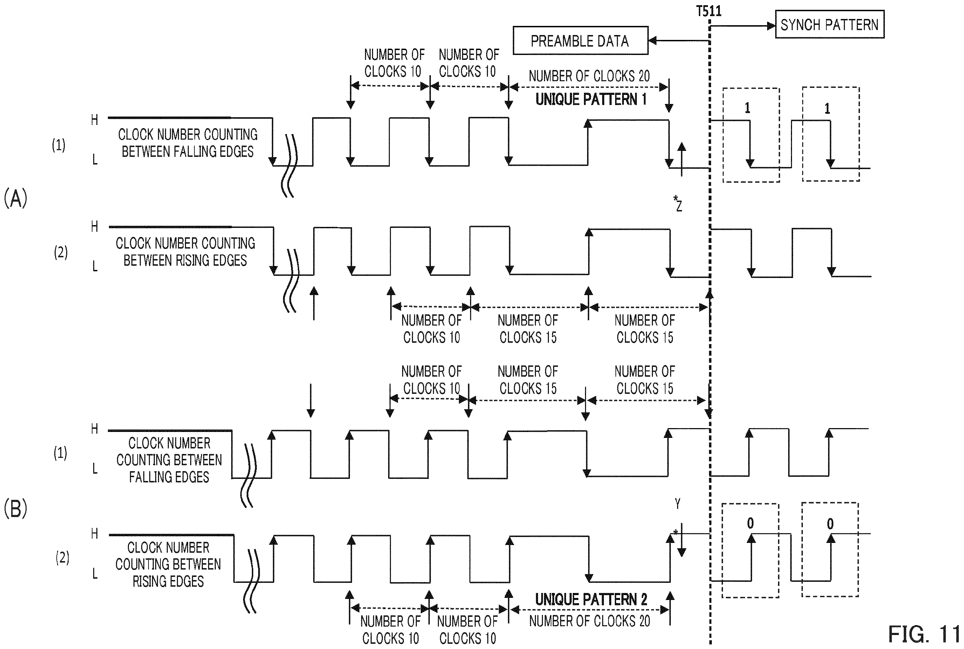

Next, detection of a unique pattern will be described in detail using FIG. 11. In FIG. 11, (A) illustrates a normal polar unique pattern and a reception waveform in the vicinity of the unique pattern when a two-wire cable is in normal connection. In FIG. 11, (A-(1) indicates the number of clocks counted by first unique-pattern detection section 151 and (A)-(2) indicates the number of clocks counted by second unique-pattern detection section 152. In FIG. 11, (B) illustrates an inversion polarity unique pattern and a reception waveform in the vicinity of the unique pattern when a two-wire cable is in reverse connection. In FIG. 11, (B)-(1) indicates the number of clocks counted by first unique-pattern detection section 151 and (B)-(2) indicates the number of clocks counted by second unique-pattern detection section 152.

When the two-wire cable is in normal connection, as illustrated by (A)-(1) in FIG 11, the number of clocks counted in first unique-pattern detection section 151 becomes "20" between the adjacent falling edges of unique pattern 1, coincides with one number in the first prescribed number of clocks, becomes "10" between other adjacent falling edges and does not coincide with any number in the first prescribed number of clocks. Upon detection of unique pattern 1 by first unique-pattern detection section 151, enabling-signal generation section 153 causes an enabling signal (SSCS) to fall (activated) at predetermined timing Z. Meanwhile, as illustrated by (A)-(2) in FIG. 11, the number of clocks to be counted by second unique-pattern detection section 152 becomes "10" or "20" between any adjacent rising edges and does not coincide with any number in the first prescribed number of clocks. For this reason, second unique-pattern detection section 152 cannot detect any unique pattern. Thus, when a two-wire cable is in normal connection, only unique pattern 1 in which the number of sampling clocks is unique is detected in received-data processing section 113 (first unique-pattern detection section 151 and second unique-pattern detection section 152).

When a two-wire cable is in reverse connection, as indicated by (B)-(2) in FIG. 11, the number of clocks counted in second unique-pattern detection section 152 becomes "20" between adjacent rising edges of unique pattern 2, coincides with one number in the first prescribed number of clocks, becomes "10" between other adjacent rising edges and does not coincide with any number in the first prescribed number of clocks. Upon detection of unique pattern 2 by second unique-pattern detection section 152, enabling-signal generation section 153 causes an enabling signal (SSCS) to fall (activated) at predetermined timing Y. Meanwhile, as indicated by (B)-(1) in FIG. 11, the number of clocks to be counted by first unique-pattern detection section 151 becomes "10" or "15" between any adjacent rising edges and does not coincide with any number in the first prescribed number of clocks. For this reason, first unique-pattern detection section 151 cannot detect any unique pattern. Thus, when a two-wire cable is in reverse connection, only unique pattern 2 in which the number of sampling clocks is unique is detected in received-data processing section 113 (first unique-pattern detection section 151 and second unique-pattern detection section 152).

Note that, for the reception waveform in (B) of FIG. 11, when a unique pattern which is obtained by inversion of the reception waveform in (A) of FIG. 11 and in which the number of clocks between falling edges at the time of normal polarity is present, naturally, a unique pattern in which the number of clocks between rising edges at the time of inversion polarity becomes the first prescribed number of clocks is present. Mapped positions and timings of unique patterns 1 and 2 in this case become the same, and timings Z and Y at which an enabling signal (SSCS) is caused to fall (activated) also coincide with each other (timing T510 of FIG. 10).

### <Detailed Description of Correction Processing of Counter Values>

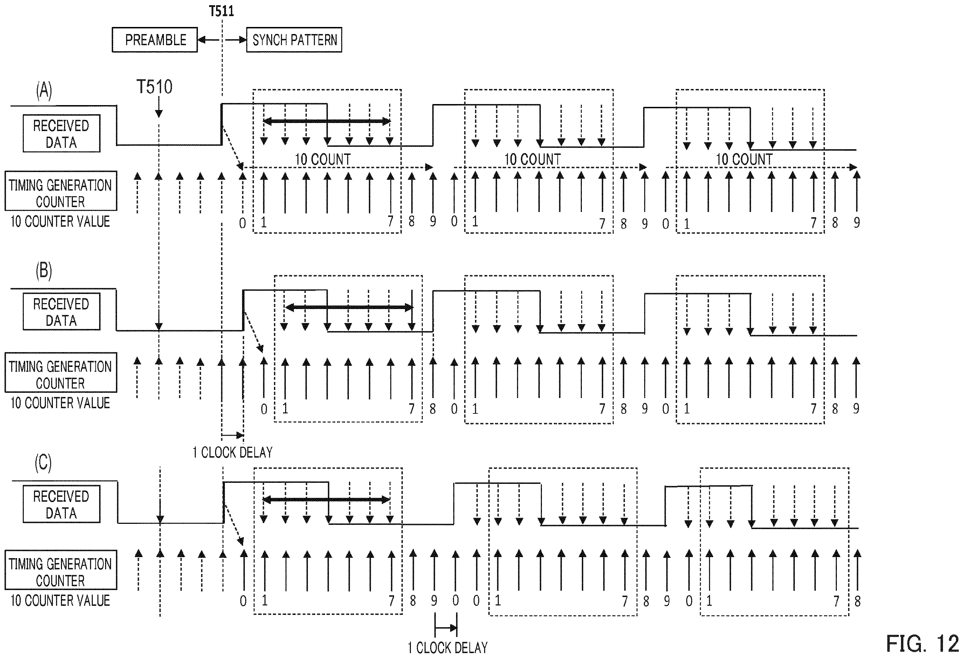

Next, the details of the correction processing (timing adjustment processing) of counter values to be performed by timing adjustment section 154 will be given using FIG 12. In FIG. 12, (A) illustrates a case where the waveform edge of the start of received data and the waveform edge of the end of the same are not delayed. In FIG. 12, (B) illustrates a case where the waveform edge of the start of received data is delayed by one sampling clock in asynchronous metastable processing for the received data and the sampling clock of the first frequency. In FIG. 12, (C) illustrates a case where the waveform edge of the end of received data is delayed by one sampling clock in asynchronous metastable processing for the received data and the sampling clock of the first frequency.

Timing adjustment section 154 starts the operation of the timing generation counter for counting using the first frequency clock (48MHz) immmediately after detecting timing T511 of the waveform edge where a waveform edge of the first received data appears from tming T510 at which the enabling signal (SSCS) becomes active after detecting the unique pattern of the preamble.

In case of (A) in FIG. 12, no delay occurs in the waveform edges of the start/end of received data, and the waveform edge of the start of the second and subsequent received data is at the timing of counter value "9" (normal value). In this case, timing adjustment section 154 does not correct the counter value, but resets the timing generation counter with counter value "9" and starts counting using a value subsequent to count value "9," as count value "0."

In case of (B) in FIG. 12, the waveform edge of the start of the received data is delayed by one sampling clock from the case illustrated in (A) of FIG. 12, and the waveform edge of the start of the second received data becomes the timing of counter value "8." In this case, timing adjustment section 154 resets the timing generation counter without counting the counter value "9," and starts counting using a value subsequent to count value "8," as count value "0." Thus, the time from the waveform edge (count value "8") of the bit boundary between the first received data and the second received data in (B) in FIG. 12 to the first sampling point (count value "1") of the data reproduction window of the second received data can be matched to the case illustrated in (A) of FIG. 12.

In case of (C) in FIG. 12, the waveform edge of the end of the received data is delayed by one sampling clock from the case illustrated in (A) of FIG. 12, and the waveform edge of the start of the second received data becomes the timing of counter value "0." In this case, timing adjustment section 154 resets the timing generation counter to be count value "0" and then starts counting using a subsequent value after resetting the timing generation counter, as count value "0." Thus, the time from the waveform edge (count value: first "0") of the bit boundary between the first received data and the second received data of (C) in FIG. 12 to the first sampling point (count value "1") of the data reproduction window of the second received data can be matched to the case illustrated in (A) in FIG 12.

### <Detailed Description of Decoding Processing of Received Data>

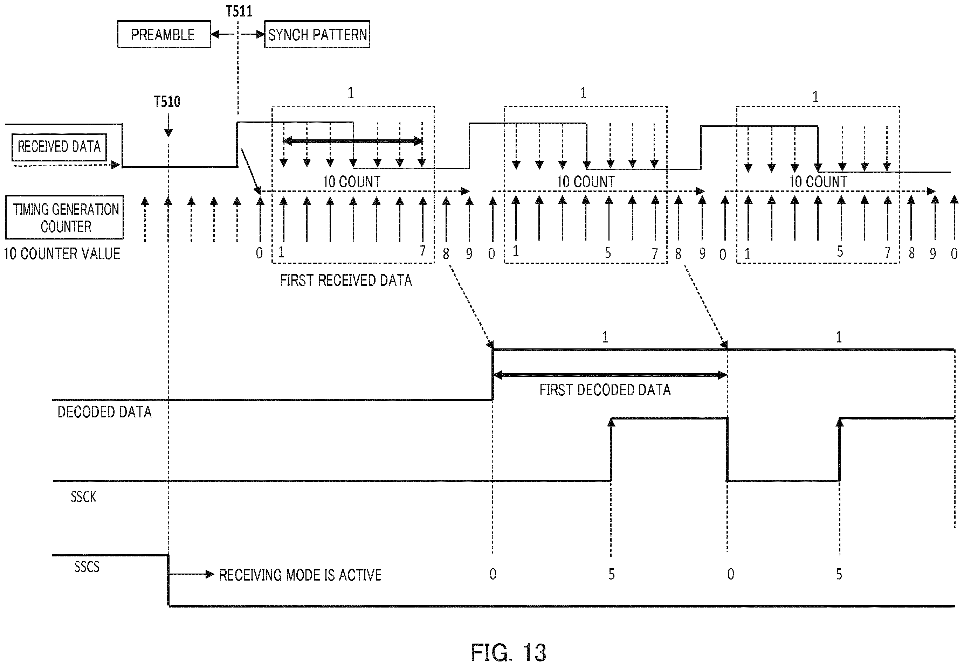

Next, the details of the decoding processing of received data to be performed by received-data decoding section 155 will be given using FIG. 13, FIG. 14, and FIG. 15. Note that, FIGS. 13, 14, and 15 correspond to FIGS. 12A, 12B, and 12C, respectively.

In any of FIGS. 13, 14, and 15, received-data decoding section 155 scan detects logical inversion of a waveform for 1 bit of received data in the range of a data reproduction window from the counter values "1" to "7" and applies decoding processing of the data corresponding to logical inversion of the Manchester encoded waveform for the 1 bit of the received data. More specifically, in the range of the data reproduction window, received-data decoding section 155 sets the value of decoded data to "1," when a waveform is inverted from "H" to "L," and received-data decoding section 155 sets the value of decoded data to "0" when a waveform is inverted from "L" to "H."

Received-data decoding section 155 determines the value of decoded data at the timing of counter value "8" for each received data and starts, at the timing of the next counter value "0," outputting of decoded data after constant delay and continues the outputting of the decoded data until the point of constant delay corresponding to the timing of the next counter value "0" of the next received data.

Note that, second-clock generation section 156 changes the second frequency clock (SSCK) for each decoded data corresponding to received data from "L" to "H" at the timing of counter value "5" of the next received data.

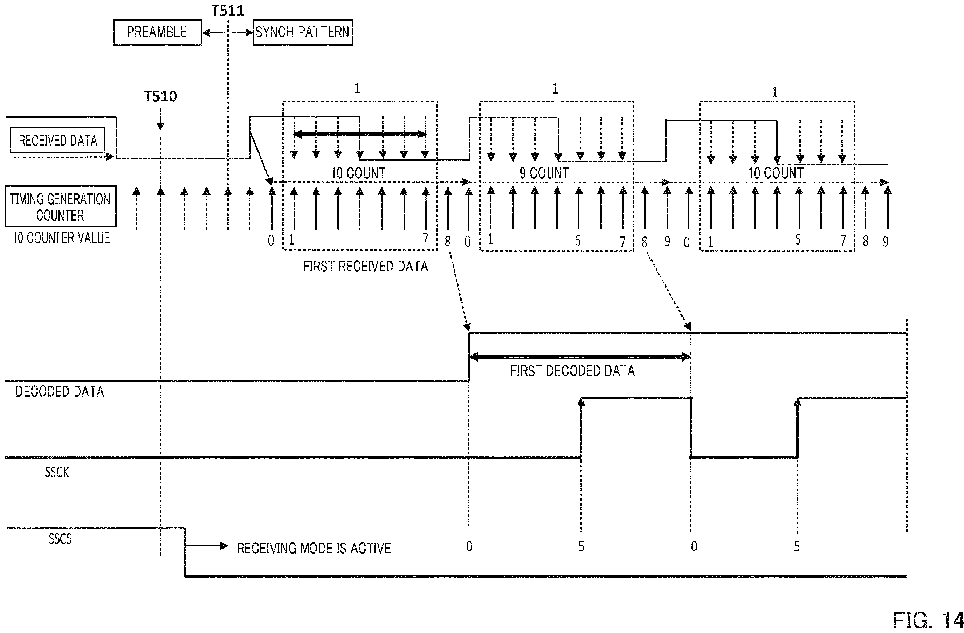

In case of FIG. 14, the next value of the counter value "8" of the first received data becomes "0" instead of "9," the period of "H" for the the second frequency clock (SSCK) of for the first decoded data becomes short by one sampling period as compared with a normal period. Likewise, the output period of the first decoded data corresponding to the output period of "H" for the first second frequency clock (SSCK) becomes short by one sampling period as compared with the normal period.

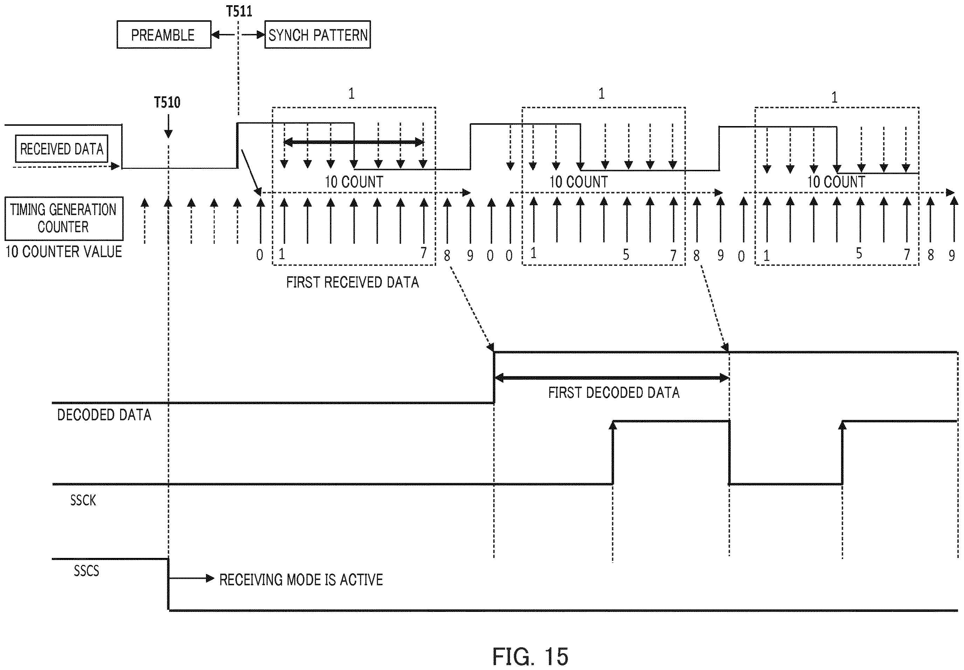

In case of FIG. 15, the counter value "0" of the second received data appears twice in a row, the period of "L" for the second frequency clock (SSCK) for the second decoded data becomes long by one sampling period as compared with the normal period. Moreover, the output period of the second decoded data corresponding to the output period of "L" for the second frequency clock (SSCK) becomes long by one sampling period as compared with the normal period. Note that, when the counter value "0" appears twice in a row as in the second received data in FIG. 15, the first counter value "0" of the received data becomes a boundary with adjacent decoded data for which outputting starts after a prescribed time delay, and the clock (SSCK) falls from "H" to "L" at the same timing.

Thus, in this embodiment, counting is performed using the first frequency clock after the waveform edge of the first received data is detected, and in a case where a waveform edge is generated in a boundary for every bit of each received data, the counter value is corrected when the counter value at the timing of the waveform edge of a boundary for each bit is different from a normal value. Thus, the start timing of a data reproduction window can be adjusted in order to cause the timing of the logical inversion for determining the logic of a Manchester encoded waveform to always fall within a range of the data reproduction window of counter values "1" to "7" of received data, or in order for a waveform edge of a bit boundary not to fall within the data reproduction window in a case where a waveform edge is generated in a boundary of every bit of each received data.

Note that, the internal configuration of received-data processing section 213 of repeater 200 and the internal configuration of received-data processing section 313 of indoor monitor 300 are also the same as the internal configuration of received-data processing section 113 of lobby station 100 illustrated in FIG. 9. In received-data processing section 213 of repeater 200, however, first unique-pattern detection section 151 or second unique-pattern detection section 152 outputs the signal indicating that the unique pattern has been detected also to transfer-data processing section 215, and received-data decoding section 155 outputs decoding data also to transfer-data processing section 215.

### < Synchronization Detection Processing Flow>

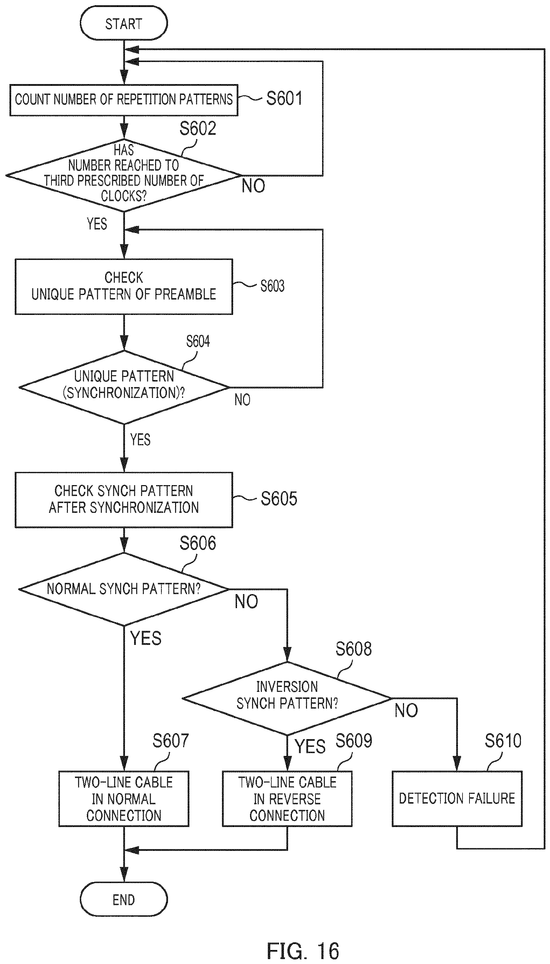

Next, the flow of the synchronization detection processing in lobby station 100 (received-data processing section 113, connection-state detection section 134) will be described using FIG. 16.

In step S601, received-data processing section 113 samples, by number-of-repetition patterns detection section 150, the preamble data included in the UL signal before demodulation and outputted from reception driver 111, using the clock of first-clock generation section 131, and performs counting when the number of clocks between adjacent falling edges (or between adjacent rising edges) coincides with any number in the second prescribed number of clocks.

Step S601 is repeated until the count value reaches the third prescribed number of clocks (S602: NO). When the count value reaches the third-prescribed number of clocks (S602: YES), the flow is advanced to step S603 in order to start unique pattern detection.

In step S603, received-data processing section 113, by first and second unique-pattern detection sections 151 and 152, samples the preamble data included in the UL signal before demodulation and outputted from reception driver 111, using the clock of first-clock generation section 131, and checks a unique pattern of the preamble data based on the number of clocks of a measurement section which is a section between adjacent falling edges or between adjacent rising edges.

When a unique pattern is successfully detected (S604: YES), the flow is advanced to step S605 under the assumption that bit synchronization is successful, and when a unique pattern cannot be detected (S604: NO), the flow is returned to step S603, and checking of a unique pattern is performed again.

In step S605, connection-state detection section 134 checks a synchronization pattern of the received data outputted from data reproduction section 133.

When the synchronization pattern of the received data coincides with the normal-connection check synchronization pattern (S606: YES), in step S607, connection-state detection section 134 determines that the two-wire cable is in normal connection, and ends the synchronization detection processing.

Moreover, when the synchronization pattern of the received data coincides with the reverse-connection check synchronization pattern (S606: NO, S608: YES), in step S609, connection-state detection section 134 determines that the two-wire cable is in reverse connection, and ends the synchronization detection processing.

Moreover, in a case where the synchronization pattern of the received data coincides with neither the normal-connection check synchronization pattern nor the reverse-connection check synchronization pattern (S606: NO, S608: NO), in step S610, connection-state detection section 134 determines that detection of the synchronization pattern has been failed, and returns the flow to step S601 and performs checking of a unique pattern again.

### <Time Slot Assignment In Basic Communication Frame>

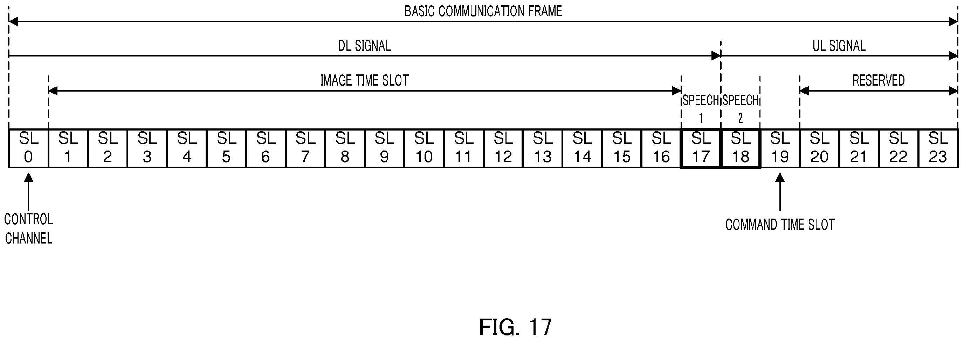

Next, the time slot assignment in a basic communication frame according to this embodiment will be described using FIG. 17.

For time slots used for images (hereinafter, each referred to as "image time slot"), when 150-byte image data is assigned to the user data field of 1 time slot, for example, since the number of basic communication frames is 100 for 1 second and the number of image time slots for 1 frame is "16," the image transfer capacity is 150 × 8 × 16 × 100 = 1.92 Mbps. Note that, when indoor monitors 300 communicate with each other, the image transfer rate of about 1 Mbps can be secured even with division of 16 time slots between UL and DL communications by half.

For the time slots used for speeches (hereinafter, each referred to as speech time slot), 1 time slot is secured for each of UL and DL communications.

In case of transmission from lobby station 100 to indoor monitor 300, only a required number of time slots may be used as image time slot(s), and all the 16 time slots may be used as image time slots.

Usually, image data is transmitted only in DL from lobby station 100 to indoor monitor 300, so that "SL0 to SL17" of the basic communication frame illustrated in FIG. 17 may be exclusively used for DL communication and "SL18" and subsequent slots may be exclusively used for UL communication. However, reserved slots "SL20 to SL23" may be used for DL communication. Note that, "SL0" mentioned above is a control channel for the base communication frame. Moreover, "SL19" is a command time slot. Lobby station 100 transmits a connection request to specified indoor monitor 300 using SL0. Indoor monitor 300 that has received the connection request (transmission destination ID coincides with that of indoor monitor 300) transmits a connection request confirmation to lobby station 100, using SL19.

### <Sequence from Standby State to Communication State>

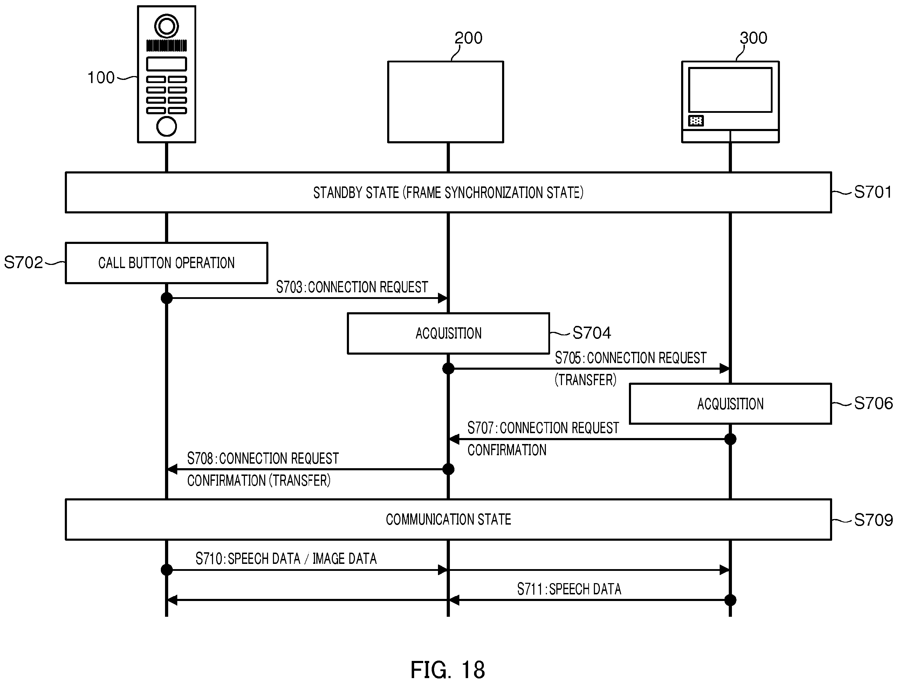

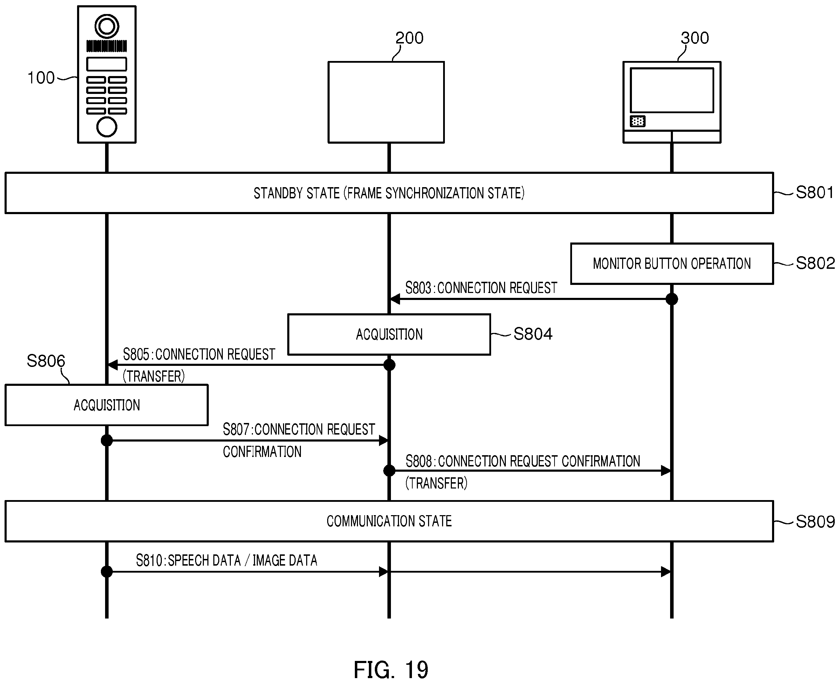

Next, the sequence from a standby state (frame synchronization state) according to this embodiment to a communication state will be described using FIG. 18 and FIG. 19.

FIG. 18 illustrates a sequence of a case where an operation is started by lobby station 100. When an operation to press a call button of lobby station 100 is performed (S702) in a standby state (frame synchronization state) where no data is transmitted or received between devices (S701), lobby station 100 transmits, using SL0, the connection request including the control data illustrated in FIG. 2B to repeater 200 (S703).

Repeater 200 acquires the connection request transmitted from lobby station 100 (S704) and checks the transmission destination ID. Note that, the term "acquiring of a connection request" specifically means to sample a connection request using the first frequency clock, then to detect a unique pattern in the preamble and establish bit synchronization, and to reproduce the connection request, using the second frequency clock, and detect a synchronization pattern.

When confirming that the transmission destination ID of the connection request is for indoor monitor 300 connected to repeater 200, repeater 200 transfers the connection request to indoor monitor 300 connected to repeater 200 (S705). Note that, when confirming that the transmission destination ID of the connection request transmitted from lobby station 100 is not for indoor monitor 300 connected to repeater 200, repeater 200 transfers the connection request to repeater 200 in a subsequent layer.

Indoor monitor 300 acquires a connection request transferred from repeater 200 (S706) and checks the transmission destination ID. When confirming that the transmission destination ID of the connection request is for indoor monitor 300, indoor monitor 300 transmits a connection request confirmation to repeater 200, using SL19 (S707).

Repeater 200 transfers, to lobby station 100, the connection request confirmation transmitted from indoor monitor 300 (S708).

When lobby station 100 receives the connection request confirmation, lobby station 100, repeater 200, and indoor monitor 300 enter a communication state (S709).

Subsequently, lobby station 100 transmits speech data and image data to indoor monitor 300 via repeater 200, using DL packets (S710), and indoor monitor 300 transmits speech data to lobby station 100 via repeater 200, using UL packets (S711).

FIG. 19 illustrates a sequence of a case where an operation is started by indoor monitor 300. When an operation to press a monitor button of indoor monitor 300 is performed (S802) in a standby state (frame synchronization state) where no data is transmitted or received between devices (S801), indoor monitor 300 transmits, using SL19, a connection request including the control data illustrated in FIG. 2B to repeater 200 (S803).

Repeater 200 captures the connection request transmitted from indoor monitor 300 (S804) and checks transmission destination ID. When confirming that the transmission destination ID of the connection request is for lobby station 100, repeater 200 transfers the connection request to indoor monitor 300 (S805).

Lobby station 100 finds the connection request transferred from repeater 200 (S806) and checks the transmission destination ID. When confirming that the transmission destination ID of the connection request is for lobby station 100, lobby station 100 transmits a connection request confirmation to repeater 200, using SL0 (S807).

Repeater 200 transfers, to indoor monitor 300, the connection request confirmation transmitted from lobby station 100 (S808).

When indoor monitor 300 receives the connection request confirmation, lobby station 100, repeater 200, and indoor monitor 300 enter a communication state (S809), and monitoring of the speech data and the image data from lobby station 100 becomes possible (S810).

### <Internal Configuration of Data Reproduction Section>

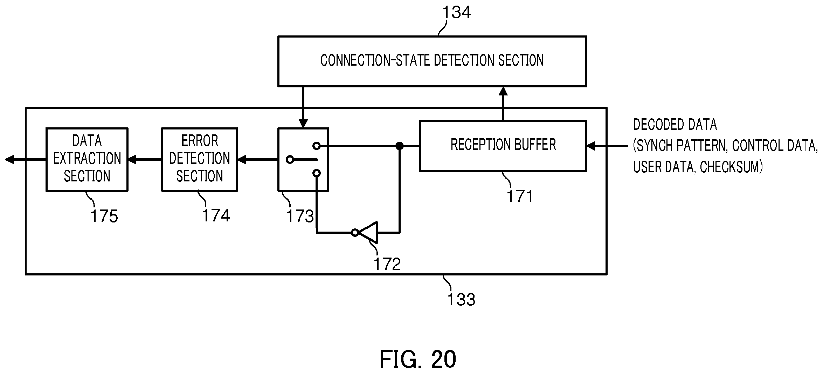

Next, the details of the internal configuration of data reproduction section 133 of lobby station 100 will be given using FIG. 20. As illustrated in FIG. 20, data reproduction section 133 includes reception buffer 171, data inversion section 172, selection switch 173, error detection section 174, and data extraction section 175. Note that, the data inputted into reception buffer 171 is the decoded data resulting from completion of the decoding processing.

Reception buffer 171 acquires a UL packet outputted from received-data processing section 113 and outputs a synchronization pattern included in the UL packet to connection-state detection section 134. Moreover, reception buffer 171 temporarily saves a data portion (control data, user data, and checksum) subsequent to the synchronization pattern. Data inversion section 172 inverses the polarity of the data portion saved in reception buffer 171.

Selection switch 173 switches a connection destination based on control of connection-state detection section 134 and outputs the data saved in reception buffer 171 or the data generated by data inversion section 172. When the two-wire cable is determined to be in normal connection by connection-state detection section 134, selection switch 173 connects to reception buffer 171 and outputs the data saved in reception buffer 171 to error detection section 174 without changing the logic of the data. Meanwhile, when the two-wire cable is determined to be in reverse connection by connection-state detection section 134, selection switch 173 connects to data inversion section 172 and outputs the data generated by data inversion section 172 to error detection section 174.

Error detection section 174 performs error detection processing using a checksum for the data portion outputted from selection switch 173. When detecting an error, error detection section 174 discards control data and user data, and when detecting no errors, error detection section 174 outputs control data and user data to data extraction section 175.

Data extraction section 175 extracts desired data from the control data and the user data outputted from error detection section 174, and outputs the extracted desired data to speech I/F section 105 and identifier setting section 135.

With this configuration, it is no longer necessary to perform detection of normal connection or reverse connection of a two-wire cable, and a sequence of predetermiend logical inversion processing of transmission and reception data at the time of reverse connection in the initial setting between the communication devices of star-type connection. Accordingly, for the data inputted at the time of normal communication, logic determination and logic correction can be performed by processing of only a receiving side in real time with all topologies including daisy-chain connection. Thus, in each connection device, even when received data is inputted with normal logic or reverse logic, normal communication can be performed, and degradation of the communication quality can be prevented.

Note that, the internal configuration of data reproduction section 233 of repeater 200 and the internal configuration of data reproduction section 333 of indoor monitor 300 are also the same as the internal configuration of data reproduction section 133 of lobby station 100 illustrated in FIG. 20.

### <Internal Configuration of Transfer-Data Processing Section>

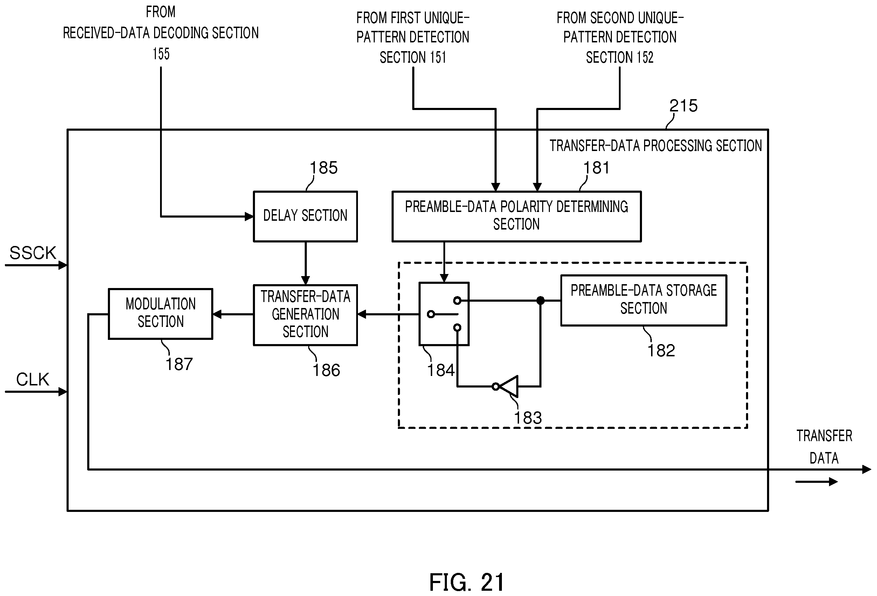

Next, the details of the internal configuration of transfer-data processing section 215 of repeater 200 will be given using FIG. 21. As illustrated in FIG. 21, transfer-data processing section 215 includes preamble-data polarity determining section 181, preamble-data storage section 182, data inversion section 183, selection switch 184, delay section 185, transfer-data generation section 186, and modulation section 187. The first frequency clock (CLK) is used for the reference clock of transfer-data processing section 215.

Preamble-data polarity determining section 181 determines whether a two-wire cable is in normal connection or reverse connection by determining whether the inputted unique pattern of the preamble is one that has been detected by first unique-pattern detection section 151 or second unique-pattern detection section 152, and controls selection switch 184 based on the result of determination. More specifically, in case of normal connection (when the inputted unique pattern of the preamble is one that has been detected by first unique-pattern detection section 151), preamble-data polarity determining section 181 controls selection switch 184 so as to connect preamble-data storage section 182 and transfer-data generation section 186 with each other. Thus, the preamble data at the time of normal connection stored in preamble-data storage section 182 is outputted to transfer-data generation section 186. Meanwhile, in case of reverse connection (when the inputted unique pattern of the preamble is one that has been detected by second unique-pattern detection section 152), preamble-data polarity determining section 181 controls selection switch 184 so as to connect data inversion section 183 and transfer-data generation section 186 with each other. Thus, the preamble data at the time of reverse connection generated by data inversion section 183 is outputted to transfer-data generation section 186.

Preamble-data storage section 182 stores preamble data at the time of normal connection, which is un-encoded digital data. Data inversion section 183 inverses the polarity of preamble data at the time of normal connection stored in preamble-data storage section 182, and generates preamble data at the time of reverse connection.

Selection switch 184 switches a connection destination based on control of preamble-data polarity determining section 181 and outputs the preamble data at the time of normal connection stored in preamble-data storage section 182 or the preamble data at the time of reverse connection generated by data inversion section 183 to transfer-data generation section 186.

Delay section 185 performs delay adjustment processing that delays, for a predetermined period, the decoded data outputted from received-data decoding section 155, and outputs the decoded data to transfer-data generation section 186. Note that, the second frequency clock (SSCK) generated in received-data processing section 213 is used for reducing the number of resistors for delay.

Transfer-data generation section 186 uses the second frequency clock (SSCK) and matches the preamble data outputted from selection switch 184 with the decoded data outputted from delay section 185, and builds transfer-data before modulation, and outputs the transfer-data to modulation section 187.

Modulation section 187 applies modulation processing adopting the Manchester coding illustrated in FIGS. 6 and 7 (Manchester encoding processing) to the transfer-data outputted from transfer-data generation section 186, and outputs transfer-data after modulation to routing control section 212.

### <Routing Control>

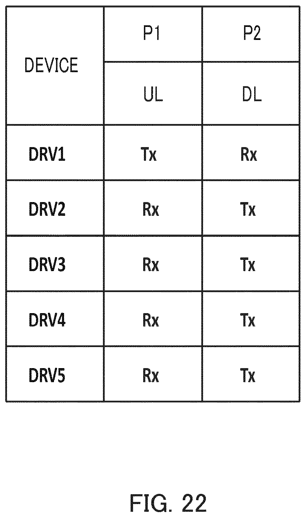

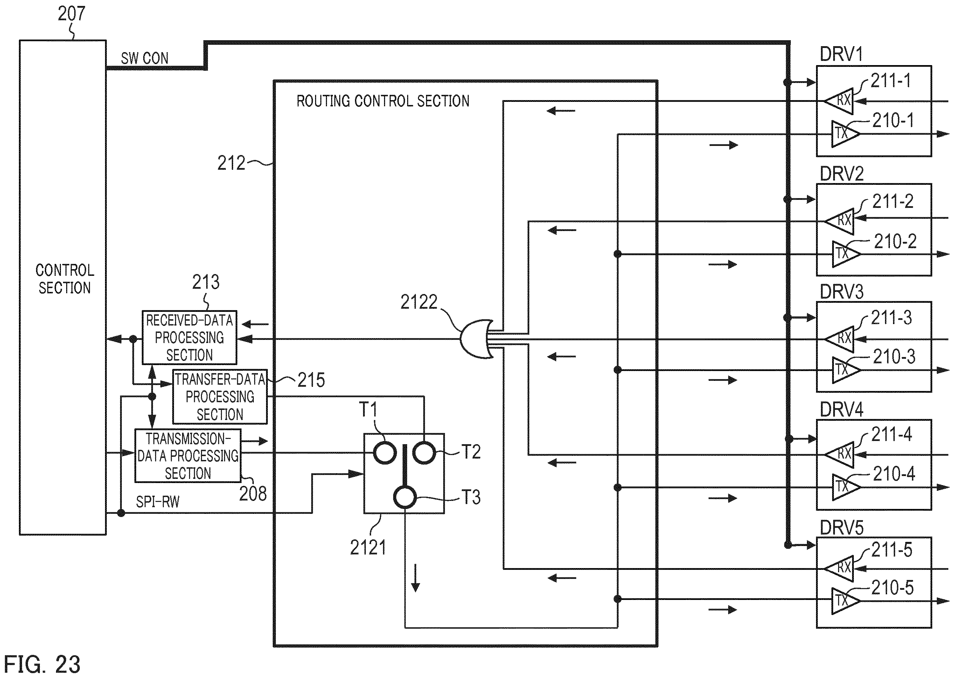

Next, a specific example of routing control in routing control section 212 of repeater 200 according to this embodiment will be described using FIG. 22 and FIG 23. The example of FIG. 22 illustrates a case where repeater 200 is connected to five devices (lobby station 100 of a preceding layer, another repeater 200 of a subsequent layer, and three indoor monitors 300) through DRV sets (each being a set of a transmission driver (Tx) and a reception driver (Rx)) 1 to 5. An assumption is made herein that DRV 1 is connected to lobby station 100 of the preceding layer, DRV 2 is connected to another repeater 200 of the subsequent layer, and DRVs 3 to 5 are connected to three indoor monitors 300, respectively. FIG 23 is a diagram illustrating the internal configuration of routing control section 212. As illustrated in FIG 23, routing control section 212 includes therein selection switch 2121 and OR circuit 2122.

Setting pattern P1 illustrates routing during UL standby and communication (enabled/disabled of communication route). With setting pattern P1, repeater 200 enters a receiving mode (mode in which no transmission is performed but only reception is performed), and control section 207, by control of SPI-RW, connects terminal T3 of selection switch 2121 to T2, then enables transmission driver (Tx) of DRV 1, and enables reception drivers (Rx) of DRVs 2 to 5.

In this case, UL data from another repeater 200 or indoor monitor 300 is received from any of DRVs 2 to 5 and outputted to received-data processing section 213 from OR circuit 2122 of routing control section 212. The data outputted from received-data processing section 213 is outputted to control section 207 for decoding and also outputted to transfer-data processing section 215 for transfer. The transfer data generated in transfer-data processing section 215 is outputted to selection switch 2121. The data that has passed through selection switch 2121 is transmitted from DRV 1 to lobby station 100. Note that, in case of UL, it is indicated via a control channel and/or the like that one of indoor monitors 300 is using a UL specified time slot, so that every indoor monitor 300 can determine whether the specified time slot is available or not. When one indoor monitor 300 is using the UL specified time slot, another indoor monitor 300 does not transmit data. Thus, only one of DRVs 2 to 5 receives a packet.

Note that, it is possible to employ a configuraiton in which connection between lobby station 100 and indoor monitor 300 is determined through repeater 200 from the state of setting pattern P1, and at the same time, repeater 200 checks a path from the ID of this indoor monitor 300, and enables transmission drivers (Tx) of DRVs 2 to 5 other than the path in accordance the result of checking.

Setting pattern P2 illustrates routing during DL standby and communication (enabled/disabled of communication route). With setting pattern P2, control section 207 connects, by control of SPI-RW, terminal T3 of selection switch 2121 to T2, then enables the reception driver (Rx) of DRV 1, and enables transmission drivers (Tx) of DRVs 2 to 5.

In this case, the DL data from lobby station 100 is received from DRV 1 and outputted to received-data processing section 213 from OR circuit 2122 of routing control section 212. The data outputted from received-data processing section 213 is outputted to control section 207 for decoding and also outputted to transfer-data processing section 215 for transfer. The transfer-data generated by transfer-data processing section 215 is outputted to selection switch 2121. The data that has passed through selection switch 2121 is transmitted from DRV 2 to repeater 200 of the subsequent layer and is transmitted from DRVs 3 to 5 to indoor monitors 300. At this time, since the communication frame communicates using time division duplex synchronization time slots, no data is inputted to DRVs 2 to 5 from an outside connection device when DRVs 2 to 5 are transmission drivers (Tx). Moreover, indoor monitors 300 respectively connected to DRVs 3 to 5 disregard this data when the transmission destination ID included in the inputted data is not their own IDs.

### <Advantageous Effects of Embodiment 1>

As mentioned above, with this embodiment, the polarity of the preamble data of received data is determined when received data is transferred, and preamble data at the time of normal connection or reverse connection is newly generated based on the result of determination. This newly generated preamble data is combined with decoded data to generate transfer data. Thus, at the time of data transfer, the preamble data can be correctly formed each time, so that even when the number of data transfers increases, accurate data communication can be performed. Therefore, deterioration of communication quality can be prevented in an intercom system in which a plurality of devices are connected with each other through a two-wire cable.

### <Variation 1 of System>

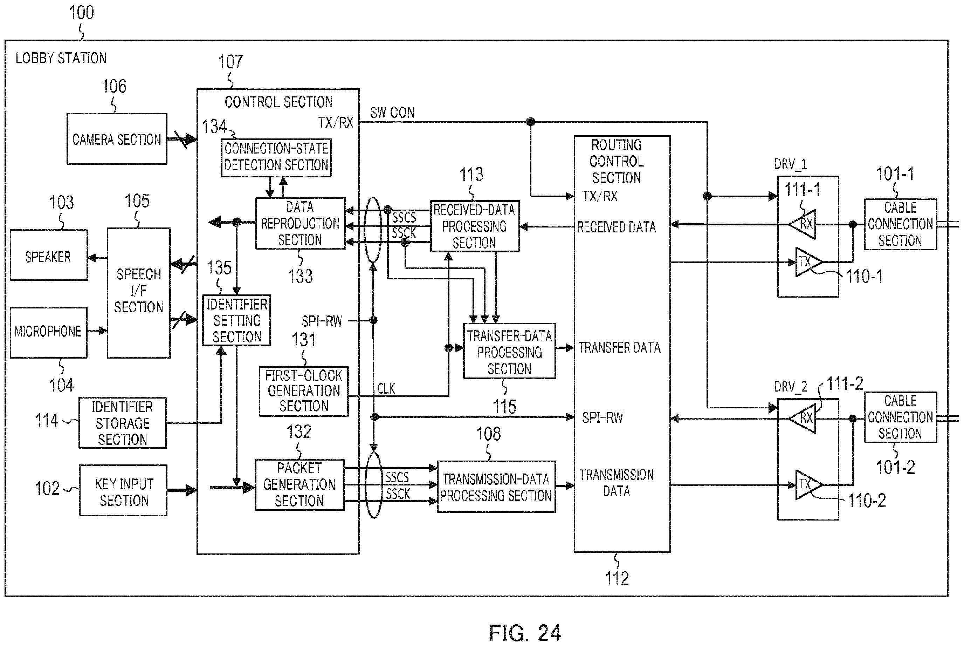

Although the case has been described above where lobby station 100 is connected to one repeater 200, this embodiment can be applied also to a case where lobby station 100 is connected to another device to be installed, for example, in an office of a building manager for multiple dwelling houses (hereinafter, referred to as "management monitor"). In this case, as illustrated in FIG. 24, in lobby station 100, in addition to cable connection section 101-1, transmission driver 110-1, and reception driver 111-1 connected to repeater 200, cable connection section 101-2, transmission driver 110-2, and reception driver 111-2 connected to the management monitor are added. Moreover, routing control section 112 and transfer-data processing section 115 are added to lobby station 100 in order that the data from indoor monitor 300 can be transferred to the management monitor. The internal configuration of routing control section 112 is the same as the internal configuration of routing control section 212 illustrated in FIG 23. The internal configuration of transfer-data processing section 115 is the same as the internal configuration of transfer-data processing section 215 illustrated in FIG. 21.

### <Variation 2 of System>

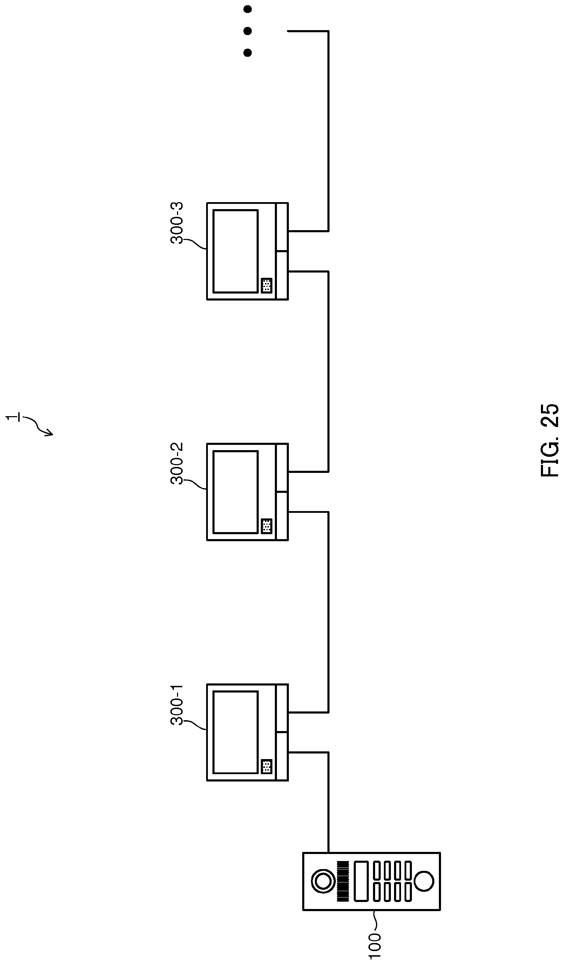

Moreover, as illustrated in FIG. 25, this embodiment can be applied to an intercom system in which each indoor monitor 300 serves as the role of repeater 200, and indoor monitors 300 are connected with each other through a two-wire cable, using daisy-chain-type wiring.

In FIG. 25, lobby station 100 is connected to one indoor monitor 300-1 through a two-wire cable. Indoor monitor 300-1 is connected to lobby station 100 of the preceding layer and indoor monitor 300-2 of the subsequent layer. Other indoor monitors 300-i ("i" is an integer greater than or equal to 2) are connected to indoor monitor 300-i-1 of the preceding layer, and indoor monitor 300-i+1 of the subsequent layer.

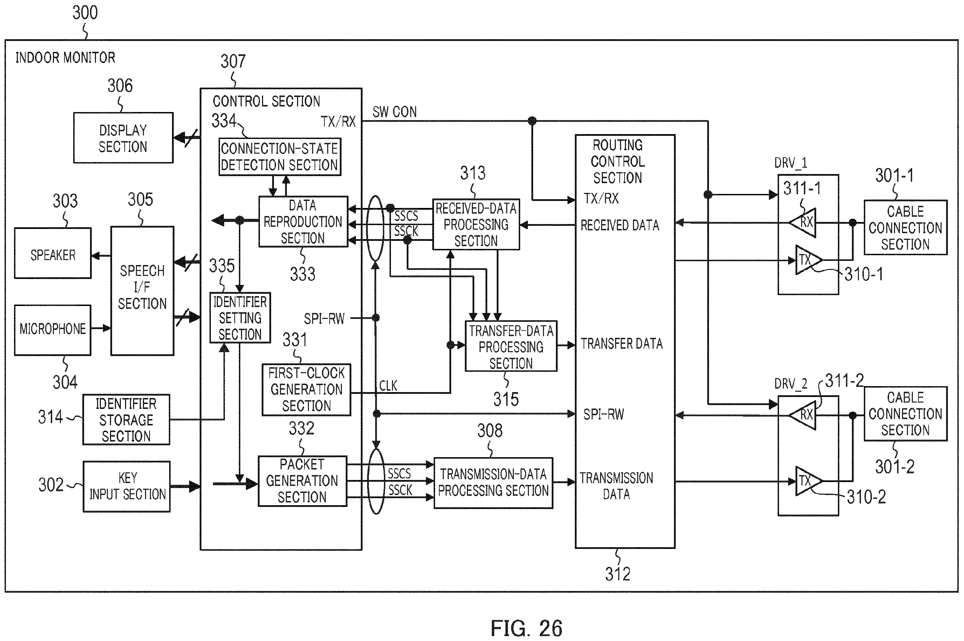

In this case, as illustrated in FIG. 26, in addition to cable connection section 301-1, transmission driver 310-1, and reception driver 311-1 connected to lobby station 100 or indoor monitor 300 of the preceding layer, cable connection section 301-2, transmission driver 310-2, and reception driver 311-2 connected to indoor monitor 300 of the subsequent layer are added to indoor monitor 300. Moreover, routing control section 312 and transfer-data processing section 315 are added to indoor monitor 300. The internal configuration of routing control section 312 is the same as the internal configuration of routing control section 212 illustrated in FIG 23. The internal configuration of transfer-data processing section 315 is the same as the internal configuration of transfer-data processing section 215 illustrated in FIG. 21.

### (Embodiment 2)

The first data of preamble at the time of regenerating a preamble starts at rising of SSCK (timing T513 of FIG. 10) as a trigger, so that a delay of 33 clocks at minimum in SSCKs occurs. In timing T511 of FIG. 10, a delay for 32 bits of preamble occurs. When SSCK is 4.8 MHz, a delay of about 7µ sec occurs every time a preamble is newly generated in transfer-data processing section 215.

When delay becomes large, the delay needs to be absorbed by increasing the length of a guard space of a time slot, so that the user data field needs to be reduced for the increased length. Therefore, it is important to perform accurate data communication while reducing delay.

Embodiment 2 has been made in view of the above-mentioned point and achieves performing accurate data communication while reducing delay even when the number of data transfers increases.

Embodiment 2 differs from Embodiment 1 in configuration of repeater 200 and internal configuration of routing control section 212.

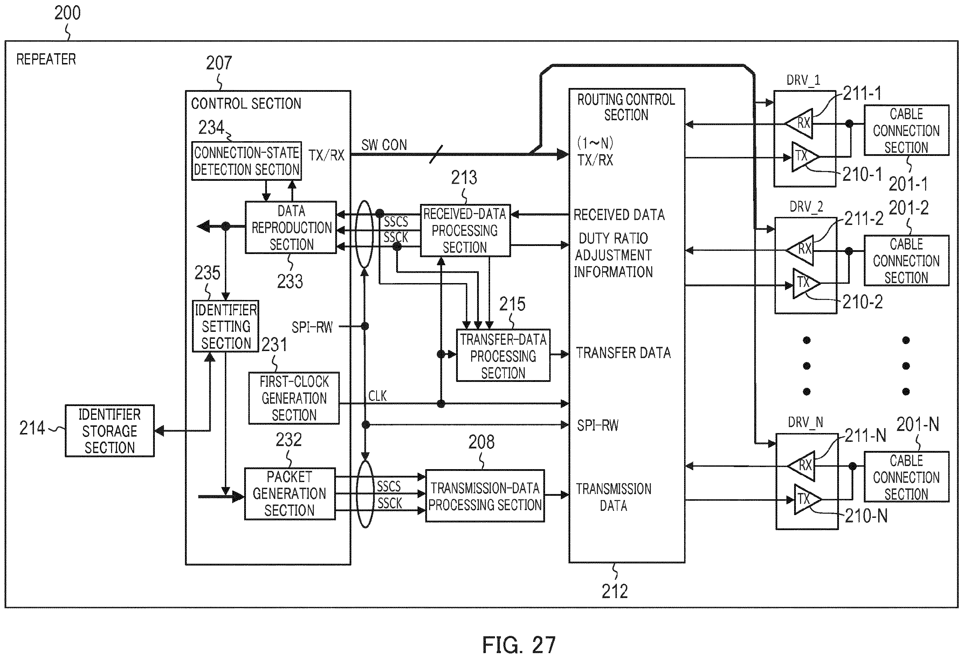

As illustrated in FIG. 27, repeater 200 of Embodiment 2 differs from repeater 200 of Embodiment 1 illustrated in FIG. 4 in that duty ratio adjustment information which is outputted from received-data processing section 213 and which is information on the waveform edge for the logic determination of received data is inputted also to routing control section 212.

### <Internal Configuration of Routing Control Section>

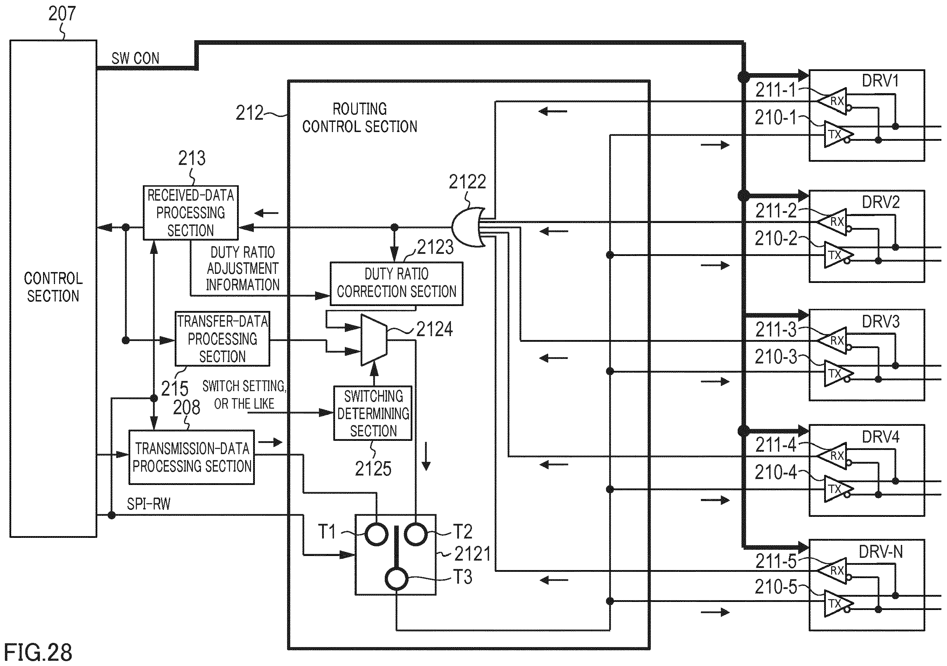

FIG. 28 is a diagram illustrating the internal configuration of routing control section 212 of repeater 200 according to Embodiment 2. Note that, in FIG. 28, parts common to the parts illustrated in FIG 23 are assigned the same reference numerals, and the descriptions of the parts will not be repeated.

Routing control section 212 illustrated in FIG. 28 employs a configuration in which duty ratio correction section 2123, selector 2124, and switching determining section 2125 are added, as compared with routing control section 212 illustrated in FIG 23.

Duty ratio correction section 2123 generates transfer data by making bit-by-bit correction of a duty ratio of the received data outputted from OR circuit 2122, based on the duty ratio adjustment information outputted from received-data processing section 213. The duty ratio adjustment information is information acquired at the time of decoding of the data after synchronization by a preamble and becomes information on the received data from a first bit of a synchronization pattern. Therefore, when a duty ratio is corrected, the preamble data for acquiring synchronization cannot be corrected. Note that, the details of duty ratio correction processing will be given, hereinafter.

Selector 2124 outputs the transfer-data outputted from duty ratio correction section 2123 or the transfer-data outputted from transfer-data processing section 215 to selection switch 2121 based on an instruction of switching determining section 2125.

Switching determining section 2125 determines which one of the transfer-data outputted from duty ratio correction section 2123 and the transfer-data outputted from transfer-data processing section 215 is to be outputted to selection switch 2121 based on an instruction of the user, such as setting of a DIP switch. Switching determining section 2125 controls selector 2124 based on the result of determination. In this case, input to switching determining section 2125 may be shared with setting of the device ID using a DIP switch. In this case, switching determining section 2125 may be configured to select the transfer-data outputted from duty ratio correction section 2123 when the device ID is an odd number and to select the transfer-data outputted from transfer-data processing section 215 when the deivce ID is an even number, for example.

### <Detailed Description of Duty Ratio Correction Processing>

Next, the details of duty-ratio correction processing will be given. Duty ratio correction section 2123 stores the median of counter values of a data reproduction window. When a counter value of a waveform edge for the logic determining of the inputted received data (timing of the rising or falling for the logic determination of Manchester encoded received data) is shifted from the median, duty ratio correction section 2123 adjusts the timing of the waveform edge for logic determination such that the counter value coincides with the median. Thus, correction is made such that the duty ratio becomes close to 50%.

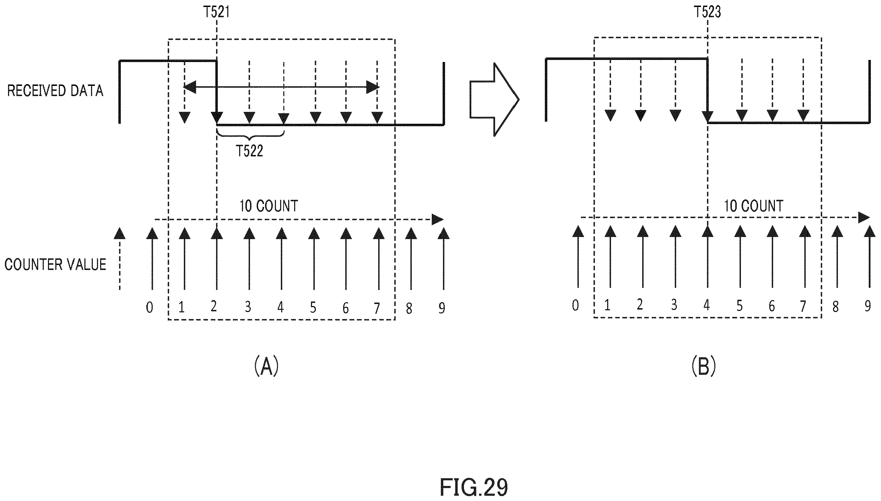

For example, the median of the data reproduction window of counter values from "1" to "7" is "4" as illustrated in FIG. 29. When the counter value of timing T521 at which the waveform of the inputted received data inverts from "H" to "L" is "2" ((A) in FIG. 29), duty ratio correction section 2123 inverts sampling data T522 in a range from the counter values "2" to "4" from "L" to "H" and causes timing T523 at which the waveform of the inputted received data inverts from "H" to "L" to coincide with counter value "4" ((B) in FIG. 29).

Likewise, when the counter value of timing T521 is "1," duty ratio correction section 2123 inverts sampling data T522 in a range from the counter values "1" to "4," and when the counter value of timing T521 is "3," duty ratio correction section 2123 inverts sampling data T522 in a range from the counter values "3" and "4." Likewise, when the counter value of timing T521 is "5," duty ratio correction section 2123 inverts sampling data T522 in a range from the counter values "4" and "5," and when the counter value of timing T521 is "6," duty ratio correction section 2123 inverts sampling data T522 in a range from the counter values "4" to "6," and when the counter value of timing T521 is "7," duty ratio correction section 2123 inverts sampling data T522 in a range from the counter values "4" to "7."

Thus, transferring the data after shifting of the duty ratio of the received waveform for every bit of the received data can improve the decoding accuracy of the received data in the transfer destination device in case of transferring received data.

Moreover, the delay caused by duty ratio correction with respect to a period from acquisition of duty ratio adjustment information and correction of transfer data to output of the transfer data is about 0.2 µ sec which corresponds to approximately 10 clocks as the first frequency clock (CLK). This delay is very small compared with the delay caused by newly generating a preamble (about 7 µ sec).

In this respect, in this embodiment, transfer-data is generated while a preamble is newly generated by transfer-data processing section 215 in one or some repeaters 200, and in another repeater 200, transfer-data is generated while duty ratio correction of the received data is performed by duty ratio correction section 2123.

For example, in repeater 200-m having an even "m" number (m is a natural number), transfer-data is generated by transfer-data processing section 215, and in repeater 200-m having an odd "m" number, transfer-data is generated by duty ratio correction section 2123. Alternatively, in repeater 200-m having m equal to a multiple of 3, transfer-data is generated by transfer-data processing section 215, and in repeater 200-m having m equal to a number other than a multiple of 3, transfer-data is generated by duty ratio correction section 2123.

More specifically, for the number of transfer times that does not break a preamble (this number is known), a fast transfer mode by duty ratio correction section 2123 is performed, and in the other cases, a new preamble generation mode by transfer-data processing section 215 is performed.

### <Advantageous Effects of Embodiment 2>

As mentioned above, in Embodiment 2, in one or some of repeaters 200, transfer-data is generated while a preamble is newly generated by transfer-data processing section 215, and in another repeater 200, transfer-data is generated while by duty ratio correction of the received data is performed by duty ratio correction section 2123. Thus, accurate data communication can be performed while delay is reduced.

### (Embodiment 3)

### <System Overview>

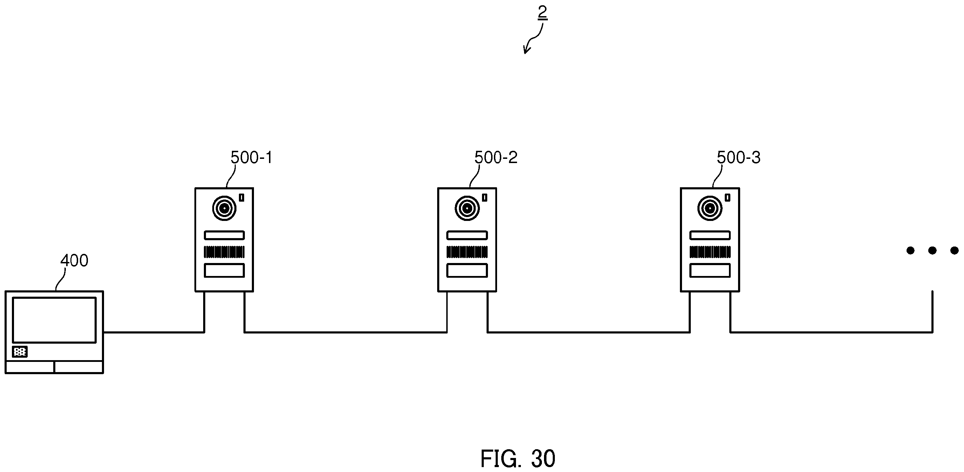

Next, the overview of an intercom system according to Embodiment 3 of this disclosure will be described using FIG. 30. As illustrated in FIG. 30, intercom system 2 includes indoor monitoring base unit 400 and a plurality of entrance slave units 500. Note that, although FIG. 30 illustrates the case where the number of cable connection sections of indoor monitoring base unit 400 is one, with this embodiment, the number of cable connection sections thereof is not limited to one and may be two or more.

Indoor monitoring base unit 400 is provided inside a house, such as a residence, for example, and is connected with one entrance slave unit 500-1 through a two-wire cable. Indoor monitoring base unit 400 communicates with entrance slave unit 500, receives video data, speech data, and control data from entrance slave unit 500, and transmits speech data and control data. Note that, in Embodiment 3, an assumption is made that indoor monitoring base unit 400 has a power supply of sufficient capacity and supplies power to all entrance slave units 500.

Entrance slave units 500 are provided in a space outside the front door of a residence or the like and are connected to each other through a two-wire cable, using daisy-chain-type wiring, for example. More specifically, entrance slave unit 500-1 is connected to indoor monitoring base unit 400 of a preceding layer and to entrance slave unit 500-2 of a subsequent layer. Other entrance slave units 500-i ("i" is an integer greater than or equal to 2) are connected to entrance slave unit 500-i-1 of a preceding layer and to entrance slave unit 500-i+1 of a subsequent layer. Connecting a plurality of entrance slave units 500 with each other, using daisy-chain-type wiring, makes wiring work easier when a plurality of entrance slave units 500 are positioned relatively close to each other, for example.

Note that, in the following description, the direction from intercom base unit 400 to entrance slave unit 500 is referred to as "downlink (DL)" and a packet and a signal to be transmitted in DL are respectively referred to as "DL packet" and "DL signal." Moreover, the direction from entrance slave unit 500 to intercom base unit 400 is referred to as "uplink (DL)" and a packet and a signal to be transmitted in UL are respectively referred to as "UL packet" and "UL signal."

### <Configuration of Indoor Monitoring Base Unit>

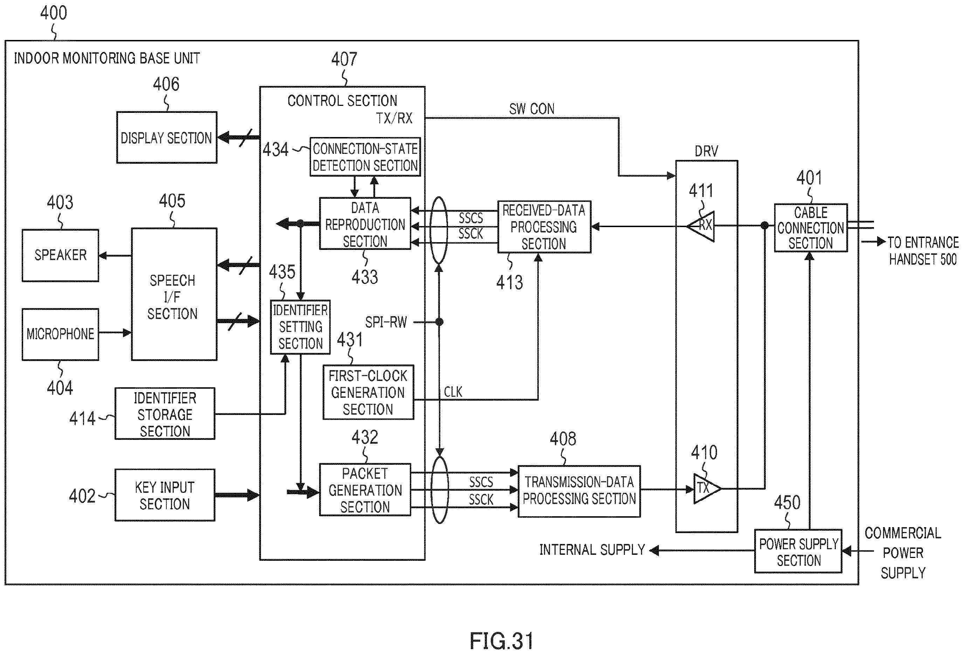

Next, a configuration of indoor monitoring base unit 400 will be described using a block diagram of FIG. 31. As illustrated in FIG. 31, indoor monitoring base unit 400 includes cable connection section 401, key input section 402, speaker 403, microphone 404, speech I/F (interface) section 405, display section 406, and control section 407. Control section 407 includes therein first-clock generation section 431, packet generation section 432, data reproduction section 433, connection-state detection section 434, and identifier setting section 435. Moreover, indoor monitoring base unit 400 includes transmission-data processing section 408, transmission driver 410, reception driver 411, received-data processing section 413, identifier storage section 414, and power supply section 450.

Cable connection section 401 includes a two-wire cable connection terminal and connects between one end of a two-wire cable, and transmission driver 410 and reception driver 411 in a signal transmittable state. Moreover, cable connection section 401 supplies DC power for entrance slave unit 500 supplied from power supply 450 to entrance slave unit 500 through the two-wire cable. Note that, the other end of the two-wire cable is connected to entrance slave unit 500. The internal configuration of cable connection section 401 will be described, hereinafter.

Key input section 402 includes a response button, and outputs, when the response button is operated, a signal indicating the operation of the response button to control section 407.

Speaker 403 converts analog speech data outputted from speech I/F section 405 into a speech and outputs the speech.

Microphone 404 collects speeches around microphone 404, then converts the speeches into analog speech data, and outputs the analog speech data to speech I/F section 405.

Speech I/F section 405 converts the digital speech data outputted from control section 407 into analog speech data, then adjusts a signal level of the analog speech data, and outputs the analog speech data to speaker 403. Moreover, speech I/F section 405 adjusts a signal level of the analog speech data outputted from microphone 404, converts the analog speech data into the digital speech data and outputs the digital speech data to control section 407. The analog/digital conversion herein is performed by an A/D converter and/or a D/A converter (not illustrated).

Note that, speech I/F section 405 may output, to control section 407, as digital speech data, the data obtained by applying predetermined speech compression processing to the data resulting from digital conversion from the analog speech data outputted from microphone 404. Moreover, when the digital speech data outputted from control section 407 is the data obtained by applying the predetermined speech compression processing, speech I/F section 405 performs digital/analog conversion after applying predetermined speech decompression processing to the applicable data.

Display section 406 includes a liquid crystal display, reproduces digital video data outputted from control section 407 and displays the video of the entrance. Note that, in a case where the digital video data outputted from control section 407 is the data obtained by performing predetermined video compression processing, predetermined video decompression processing is applied to the data, and the video is displayed.

Control section 407 controls each section of indoor monitoring base unit 400. Moreover, control section 407 outputs a switching control signal (SW CON) indicating, to transmission driver 410 and reception driver 411, a transmitting section where transmission is permitted and a receiving section where reception is permitted.

First-clock generation section 431 of control section 407 generates a clock (CLK) which is used for sampling received data and which has a first frequency (e.g., 48MHz) corresponding to n times (where n = 10) the bit rate of received data, with refenrece to crystal oscillation, and outputs the clock (hereinafter, may be referred to as "first frequency clock") to received-data processing section 413.

Packet generation section 432 of control section 407 generates a DL packet for realizing a video phone call. More specifically, packet generation section 432 divides as appropriate the digital speech data outputted from speech I/F section 405 and writes the data into the user data field of each time slot, and writes, into the control data field of each time slot, control data including a transmission source ID which is an identifier unique to indoor monitoring base unit 400 and a transmission destination ID which is an identifier unique to entrance slave unit 500. Furthermore, packet generation section 432 writes preamble data and a synchronization pattern into each time slot and generates a UL packet (transmission data). Packet generation section 432 generates a transmission enabling signal (SSCS) and a clock of a second frequency (e.g., 4.8MHz) for transmission (SSCK) (hereinafter, may be referred to as "second frequency clock"). Packet generation section 432 synchronizes the UL packet with the transmission enabling signal (SSCS) and clock (SSCK) and outputs the resultant to transmission-data processing section 408.

Note that, in the standby state (state where the time slot of a control channel operates as a beacon), in which the communication with entrance slave unit 500 is kept in the frame synchronization, when a predetermined event, such as an operation of the call button, occurs, packet generation section 432 writes required data into a predetermined time slot in a synchronization frame and generates a DL packet.

Upon input of an enabling signal (SSCS) from received-data processing section 413, data reproduction section 433 of control section 407 uses the second frequency clock (SSCK) outputted from received-data processing section 413 and outputs digital video data included in the UL packet (decoded data) outputted from received-data processing section 413, while outputting digital speech data included in the UL packet to speech I/F section 405 and outputting a synchronization pattern included in the UL packet to connection-state detection section 434.

When the two-wire cable is determined to be in normal connection by connection-state detection section 434, data reproduction section 433 outputs the data portion (control data, user data, and checksum) subsequent to the synchronization pattern while leaving the data portion unchanged. Meanwhile, when the two-wire cable is determined to be inn reverse connection by connection-state detection section 434, data reproduction section 433 inverts the data portion subsequent to the synchronization pattern and outputs the data portion.

When a predetermined event occurs during a standby state (frame synchronization state) and a DL signal (connection request) is inputted, data reproduction section 433 obtains a DL packet by demodulating the DL signal and outputs a synchronization pattern included in the DL packet to connection-state detection section 434. Data reproduction section 433 extracts control data of the connection request, after confirming that the connection request is accurately acquired by connection-state detection section 434.

Connection-state detection section 434 of control section 407 stores a normal-connection check synchronization pattern and a reverse-connection check synchronization pattern. Connection-state detection section 434 compares the synchronization pattern of the received data outputted from data reproduction section 433 with the normal-connection check synchronization pattern and the reverse-connection check synchronization pattern. Connection-state detection section 434 determines that the two-wire cable is in normal connection, when the synchronization pattern of the received data completely coincides with the normal-connection check synchronization pattern, whereas connection-state detection section 434 determines that the two-wire cable is in reverse connection, when the synchronization pattern of the received data completely coincides with the reverse-connection check synchronization pattern. Connection-state detection section 434 outputs a signal indicating the determination result to data reproduction section 433.

Identifier setting section 435 of control section 407 reads the ID of indoor monitoring base unit 400, as the transmission source ID, reads the ID of entrance slave unit 500 which is the communication counterpart from identifier storage section 414 as the transmission destination ID, and outputs the transmission source ID and transmission destination ID to packet generation section 432. Moreover, identifier setting section 435 compares the transmission destination ID included in the UL packet outputted from data reproduction section 433 with the transmission destination ID of indoor monitoring base unit 400 stored in identifier storage section 414, and when the IDs do not coincide with each other, identifier setting section 435 discards the UL packet.

Upon input of the enabling signal (SSCS) from packet generation section 432, transmission-data processing section 408 uses the second frequency clock (SSCK) outputted from packet generation section 432 and applies modulation processing to the data of the UL packet outputted from packet generation section 432 to generate a UL signal, and outputs the UL signal to transmission driver 410.

Transmission driver 410 transmits the UL signal to entrance slave unit 500 through cable connection section 401 in the transmitting section indicated by the switching control signal (SW CON) from control section 407.

Reception driver 411 receives a UL signal transmitted from entrance slave unit 500 through cable connection section 401. Reception driver 411 outputs the UL signal to received-data processing section 413 in the receiving section indicated by the switching control signal (SW CON) from control section 407.

Received-data processing section 413 uses the first frequency clock (CLK) outputted from first-clock generation section 431 and detects the timing of the first bit of a synchronization pattern on the time slot of the received data (synchronization timing with entrance slave unit 500), using the preamble data included in the DL signal outputted from reception driver 411. Received-data processing section 413 outputs, at the timing at which the unique pattern of the preamble data is detected, the enabling signal (SSCS) permitting a data reproduction operation to data reproduction section 433.

Moreover, received-data processing section 413 decodes the UL signal (received data) outputted from reception driver 411 and outputs the decoded data to data reproduction section 433. Moreover, received-data processing section 413 generates the clock (SSCK) of the second frequency (e.g., 4.8 MHz) corresponding to the bit rate of the received data, with reference to the clock (CLK) of the first frequency outputted from first-clock generation section 431, and outputs the clock to data reproduction section 433.

Identifier storage section 414 stores the identifier of entrance slave unit 500 and the identifier of indoor monitoring base unit 400.

Power supply section 450 supplies power to each section of indoor monitoring base unit 400. Moreover, power supply section 450 supplies DC power for entrance slave unit 500 to entrance slave unit 500 through a two-wire cable via cable connection section 401.

### < Configuration of Entrance Slave unit >

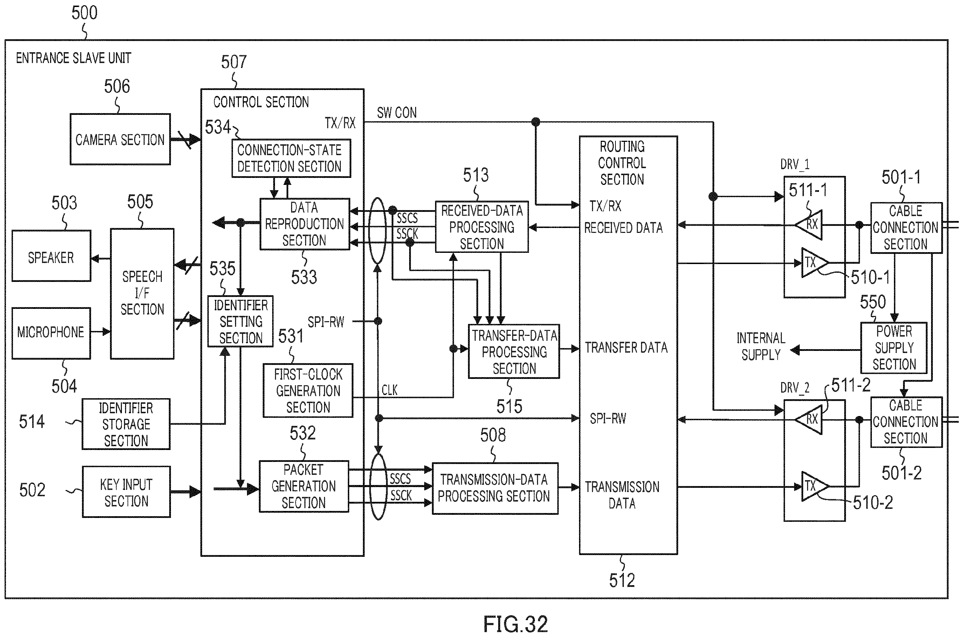

Next, a configuration of entrance slave unit 500 will be described using a block diagram of FIG. 32. As illustrated in FIG. 32, entrance slave unit 500 includes cable connection section 501, key input section 502, speaker 503, microphone 504, speech I/F section 505, camera section 506, and control section 507. Control section 507 includes therein first-clock generation section 531, packet generation section 532, data reproduction section 533, connection-state detection section 534, and identifier setting section 535. Moreover, entrance slave unit 500 includes transmission-data processing section 508, transmission driver 510, reception driver 511, received-data processing section 513, identifier storage section 514, transfer-data processing section 515, and power supply section 550.

Cable connection section 501 includes a two-wire cable connection terminal and connects between one end of a two-wire cable, and transmission driver 510 and reception driver 511 in a signal transmittable state. Note that, the other end of the two-wire cable connected to cable connection section 501-1 is connected to indoor monitoring base unit 400 or entrance slave unit 500 of a preceding layer. Furthermore, the other end of the two-wire cable is connected to cable connection section 501-2 is connected to entrance slave unit 500 of a subsequent layer. Note that, when no entrance slave unit 500 is connected in a subsequent layer, cable connection section 501-2 is open (nothing is connected thereto).

Cable connection section 501-1 supplies DC power for entrance slave unit 500 supplied from a two-wire cable to power supply section 550 and cable connection section 501-2. Moreover, cable connection section 501-2 supplies DC power for entrance slave unit 500 supplied from cable connection section 501-1 to entrance slave unit 500 of the subsequent layer from the two-wire cable.

Key input section 502 includes a call button, and outputs, when the call button is operated, a signal indicating the operation of the call button to control section 507.

Speaker 503 converts analog speech data outputted from speech I/F section 505 into a speech and outputs the speech.

Microphone 504 collects speeches around microphone 504, then converts the speeches into analog speech data, and outputs the analog speech data to speech I/F section 505.

Speech I/F section 505 converts the digital speech data outputted from control section 507 into analog speech data, then adjusts a signal level of the analog speech data, and outputs the analog speech data to speaker 503. Moreover, speech I/F section 505 adjusts a signal level of the analog speech data outputted from microphone 504, converts the analog speech data into the digital speech data and outputs the digital speech data to control section 507. The analog/digital conversion herein is performed by an A/D converter and/or a D/A converter (not illustrated).

Note that, speech I/F section 505 may output, to control section 507, as digital speech data, the data obtained by applying predetermined speech compression processing to the data resulting from digital conversion from the analog speech data outputted from microphone 504. Moreover, when the digital speech data outputted from control section 507 is the data obtained by applying the predetermined speech compression processing, speech I/F section 505 performs digital/analog conversion after applying predetermined speech decompression processing to the applicable data.

Camera section 506 includes a digital camera, captures video of an entrance, generates digital video data, and outputs the digital video data to control section 507. Note that, camera section 506 may include an encoder module. That is, camera section 506 may output, to control section 507, as digital video data, the data obtained by applying predetermined video compression processing, such as H.264 to the video data outputted from the digital camera.

Control section 507 controls each section of entrance slave unit 500. Moreover, control section 507 outputs a switching control signal (SW CON) indicating, to transmission driver 510 and reception driver 511, a transmitting section where transmission is permitted and a receiving section where reception is permitted.

First-clock generation section 531 of control section 507 generates a clock (CLK) which is used for sampling received data and which has a first frequency (e.g., 48MHz) corresponding to n times (where n = 10) the bit rate of received data, with refenrece to crystal oscillation, and outputs the clock to received-data processing section 513.

Packet generation section 532 of control section 507 generates a DL packet for realizing a video phone call. More specifically, packet generation section 532 divides as appropriate the digital speech data outputted from speech I/F section 505 and the digital video data outputted from camera section 506, writes the data into the user data field of each time slot, and writes, into the control data field of each time slot, control data including a transmission source ID which is an ID (unique identifier) of entrance slave unit 500 and a transmission destination ID which is an ID of indoor monitor 300 which is the communication counterpart. Furthermore, packet generation section 532 writes preamble data and a synchronization pattern into each time slot and generates a DL packet (transmission data). Packet generation section 532 generates a transmission enabling signal (SSCS) and a clock of a second frequency (e.g., 4.8MHz) (SSCK) for transmission. Packet generation section 532 synchronizes the DL packet with the transmission enabling signal (SSCS) and clock (SSCK) and outputs the resultant to transmission-data processing section 508.

Note that, in the standby state (state where the time slot of a control channel operates as a beacon), in which the communication with indoor monitor 400 (or another entrance slave unit 500) is kept in the frame synchronization, when a predetermined event, such as an operation of the call button, occurs, packet generation section 532 writes required data into a predetermined time slot in a synchronization frame and generates a UL or DL packet.

Upon input of an enabling signal (SSCS) from received-data processing section 513, data reproduction section 533 of control section 507 uses the second frequency clock (SSCK) outputted from received-data processing section 513 and outputs, to speech I/F section 505, digital speeh data included in the UL packet (decoded data) outputted from received-data processing section 513, and outputs a synchronization pattern included in the UL packet (decoded data) to connection-state detection section 534.

When the two-wire cable is determined to be in normal connection by connection-state detection section 534, data reproduction section 533 outputs the data portion (control data, user data, and checksum) subsequent to the synchronization pattern while leaving the data portion unchanged. Meanwhile, when the two-wire cable is determined to be in reverse connection by connection-state detection section 534, data reproduction section 533 inverts the data portion subsequent to the synchronization pattern and outputs the data portion.

When a predetermined event occurs during a standby state (frame synchronization state) and a UL signal (connection request) is inputted, data reproduction section 533 obtains a UL packet by demodulating the UL signal and outputs a synchronization pattern included in the UL packet to connection-state detection section 534. Data reproduction section 533 extracts control data of the connection request, after confirming that the connection request is accurately acquired by connection-state detection section 534.

Connection-state detection section 534 of control section 507 stores a synchronization pattern for checking when a two-wire cable is normal connection (hereinfater, referred to as "normal-connection check synchronization pattern") (e.g., 16 bits are all "0") and a synchronization pattern which is a pattern reverse to the normal-connection check synchronization pattern and used for checking when a two-wire cable is reverse connection (hereinfater, referred to as "reverse-connection check synchronization pattern") (e.g., 16 bits are all "1 "). Connection-state detection section 534 compares the synchronization pattern of the received data outputted from data reproduction section 533 with the normal-connection check synchronization pattern and the reverse-connection check synchronization pattern. Connection-state detection section 534 determines that the two-wire cable is in normal connection, when the synchronization pattern of the received data completely coincides with the normal-connection check synchronization pattern, whereas connection-state detection section 534 determines that the two-wire cable is in reverse connection, when the synchronization pattern of the received data completely coincides with the reverse-connection check synchronization pattern. Connection-state detection section 534 outputs a signal indicating the result of determination to data reproduction section 533.

Identifier setting section 535 of control section 507 reads the ID of entrance slave unit 500, as the transmission source ID, reads the ID of indoor monitor 300 which is the communication counterpart from identifier storage section 514 as the transmission destination ID, and outputs the transmission source ID and transmission destination ID to packet generation section 532. Moreover, identifier setting section 535 compares the transmission destination ID included in the DL packet outputted from data reproduction section 533 with the transmission destination ID of entrance slave unit 500 stored in identifier storage section 514, and when the IDs do not coincide with each other, identifier setting section 535 discards the UL packet.

Upon input of an enabling signal (SSCS) from packet generation section 532, transmission-data processing section 508 uses the second frequency clock (SSCK) outputted from packet generation section 532 and applies modulation processing to the data of the DL packet outputted from packet generation section 532 to generate a DL signal, and outputs the DL signal to transmission driver 510. Note that, the details (specific example) of the modulation processing to be applied by transmission-data processing section 508 will be given, hereinafter.

Transmission driver 510-1 transmits the UL signal to indoor monitor base unit 400 or entrance slave unit 500 of a preceding layer through cable connection section 501-1 in the transmitting section indicated by the switching control signal (SW CON) from control section 507. Transmission driver 510-2 transmits the DL signal to entrance slave unit 500 of a subsequent layer through cable connection section 501-2 in the transmitting section indicated by the switching control signal (SW CON) from control section 507.

Reception driver 511-1 receives a DL signal transmitted from indoor monitoring base unit 400 or entrance slave unit 500 of a preceding layer through cable connection section 501-1. Reception driver 511-1 outputs the DL signal to rounting control section 512 in the receiving section indicated by the switching control signal (SW CON) from control section 507. Reception driver 511-2 receives a DL signal transmitted from entrance slave unit 500 of a subsequent layer through cable connection section 501-2. Reception driver 511-2 outputs the DL signal to rounting control section 512 in the receiving section indicated by the switching control signal (SW CON) from control section 507.

Rounting control section 512 outputs a DL signal or UL signal outputted from reception driver 511-p (where "p" is 1 or 2) to received-data processing section 113. Furthermore, rounting control section 512 outputs the DL signal or UL signal outputted from transmission-data processing section 508 and transfer-data processing section 515 to corresponding transmission driver 510-q (where "q" is 1 or 2 (either value that is not identical to the value of "p") in accordance with an instruction from identifier setting section 535.

Received-data processing section 513 uses the first frequency clock (CLK) outputted from first-clock generation section 531 and detects synchronization (timing of the first bit of received data) with indoor monitoring base unit 400, using the preamble data included in the UL signal outputted from routing control section 512. Received-data processing section 513 outputs, at the timing at which the the unique pattern of preamble data is detected, the enabling signal (SSCS) permitting a data reproduction operation to data reproduction section 533. Received-data processing section 513 outputs the detected unique pattern to transfer-data processing section 515.

Moreover, received-data processing section 513 decodes the UL signal (received data) outputted from reception driver 511 and outputs decoded data to data reproduction section 533 and transfer-data processing section 515. Moreover, received-data processing section 513 generates the clock (SSCK) of the second frequency (e.g., 4.8 MHz) corresponding to the bit rate of the received data, with reference to the clock (CLK) of the first frequency outputted from first-clock generation section 531, and outputs the clock to data reproduction section 533. Note that, the details of the configuration of received-data processing section 513 will be given, hereinafter.

Identifier storage section 514 is a nonvolatile memory and stores the ID of entrance slave unit 500 and the ID of each indoor monitor 300.

Transfer-data processing section 515 newly generates preamble data and combines the newly generated preamble data with the decoded data outputted from received-data processing section 513 to genereate transfer-data and outputs the transfer-data to routing control section 512.

Power supply section 550 supplies power received via cable connection section 501-1 to each section of entrance slave unit 500.

### <Internal Configuration of Cable Connection Section of Indoor Monitoring Base Unit>

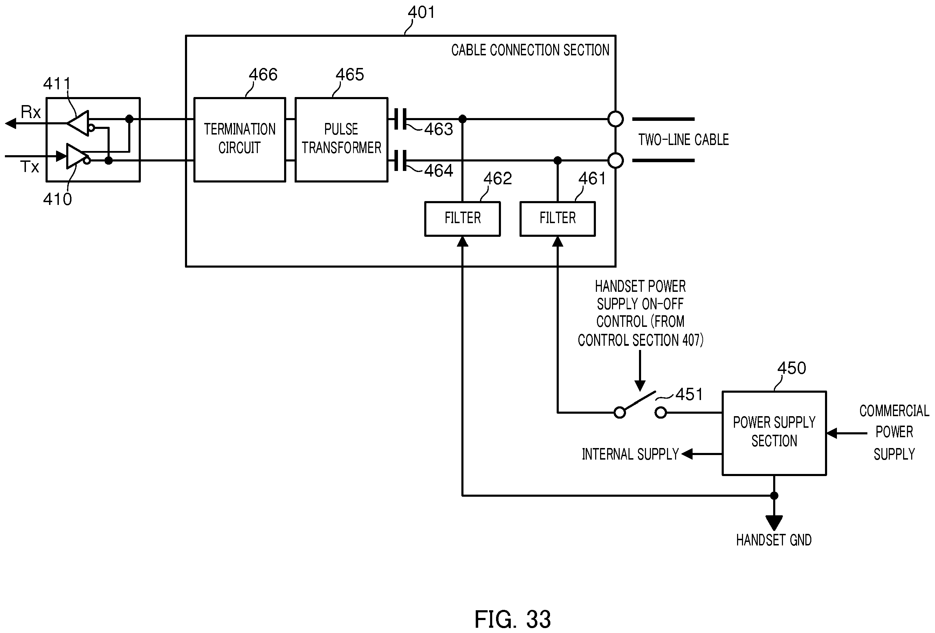

FIG. 33 is a diagram illustrating the internal configuration of cable connection section 401 of indoor monitoring base unit 400. As illustrated in FIG. 33, cable connection section 401 includes filters 461 and 462, capacitors 463 and 464, pulse transformer 465, and termination circuit 466. Moreover, power supply section 450 includes ON/OFF switch 451 which switches between supply/stop of power to the connection device.

Power supply section 450 generates power for internal supply from the commercial power supply and generates power to be supplied to entrance slave unit 500 through a two-wire cable. The power supply to be supplied to entrance slave unit 500 is passed to the two-wire cable through filters 461 and 462 each being a DC-pass low-pass filter (LPF). Filters 461 and 462 are each set to be a LPF that gives no impact on the data band on the two-wire cable.

### <Internal Configuration of Cable Connection Section of Entrance Slave unit>

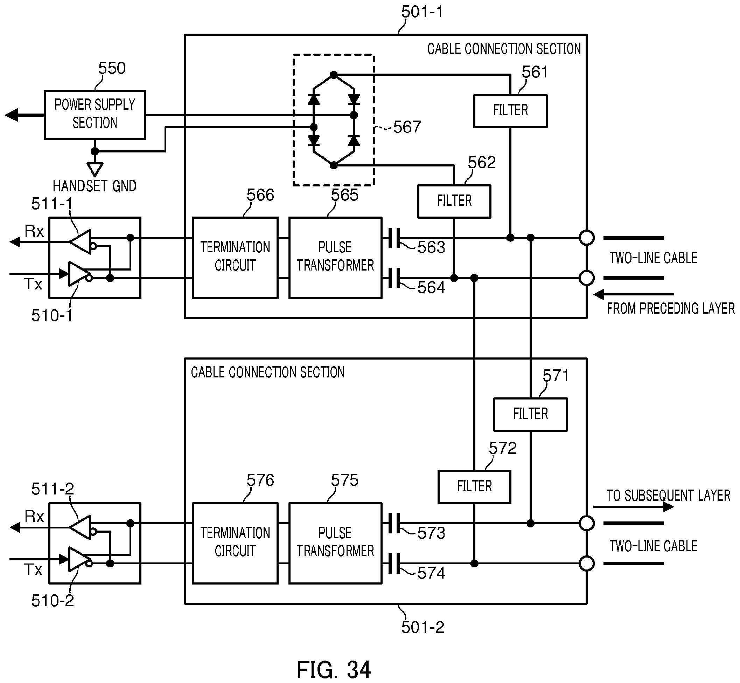

FIG. 34 is a diagram illustrating the internal configurations of cable connection sections 501-1 and 501-2 of entrance slave unit 500. As illustrated in FIG. 34, cable connection section 501-1 includes filters 561 and 562, capacitors 563 and 564, pulse transformer 565, termination circuit 566, and diode circuit 567. Moreover, cable connection section 501-2 includes filters 571 and 572, capacitors 573 and 574, pulse transformer 575, and termination circuit 576.

Entrance slave unit 500 receives, through cable connection section 501-1, the power to be supplied by the daisy chain from indoor monitoring base unit 400. Cable connection section 501-1 passes the power through filters 561 and 562 each being a DC-pass low-pass filter, and diode circuit 567 which supports reverse connection, to power supply section 550 which generates internal power. Accordingly, the power can be supplied inside entrance slave unit 500.

The power to be supplied to entrance slave unit 500 of a subsequent layer is passed to a two-wire cable through filters 561 and 562 each being a DC-pass LPF. Accordingly, the power can be supplied inside entrance slave unit 500 of the subsequent layer.

### <Variation of System>

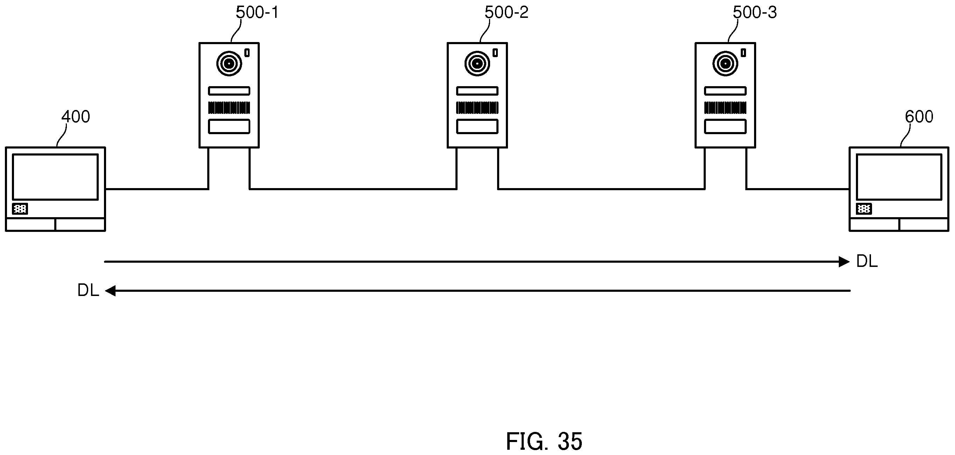

As illustrated in FIG. 35, Embodiment 3 can be applied to an intercom system in which a plurality of entrance slave units 500 (three slave units in FIG. 35) are connected mutually by daisy-chain-type wiring while one end of the daisy-chain-type wiring is connected to indoor monitoring base unit 400, and indoor monitoring slave unit 600 is connected to the other end of the daisy-chain-type wiring.

This system is effective in a case where two entrance slave units are positioned very close to each other, for example, in a two-household house, and/or a case where wiring between two indoor monitoring slave units 400 and 600 is difficult, but wiring to each entrance slave unit 500 is possible.

The internal configuration of indoor monitoring slave unit 600 is the same as that of indoor monitoring base unit 400 illustrated in FIG. 31. Note that, indoor monitoring slave unit 600 can also receive power to be supplied from entrance slave unit 500 of the preceding layer.

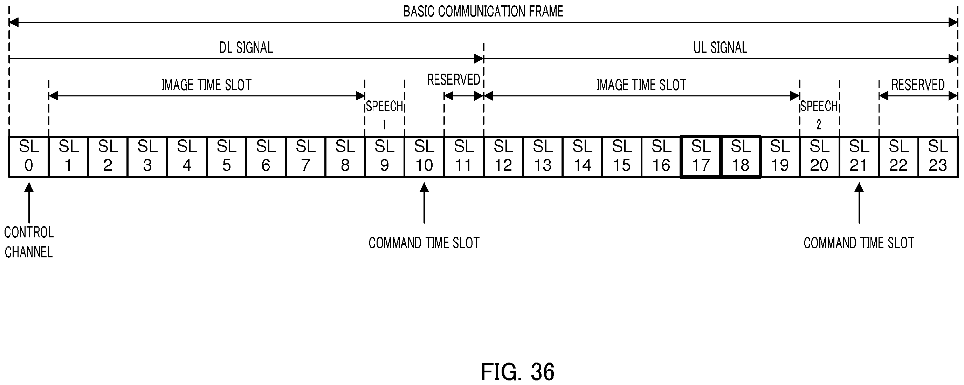

In the system of FIG. 35, a bus driver of each device is switched so as to allow a signal to flow in DL and UL. Moreover, as illustrated in FIG. 36, the basic communication frame of the system in FIG. 35 is divided between DL times slots and UL time slots.

When the call button of entrance slave unit 500-1 is pressed, entrance slave unit 500-1 transmits a connection request using both command time slots SL 10 and SL 21. In this case, since SL 21 is transferred in UL, SL 21 is received by indoor monitoring base unit 400, and since SL 21 is not transferred in DL, SL 21 is not received by indoor monitoring slave unit 600. Meanwhile, since SL 10 is transferred in DL, SL 10 is received by indoor monitoring slave unit 600, and since SL 10 is not transferred in UL, SL 10 is not received by indoor monitoring base unit 400.

When a visitor pushes the call button of entrance slave unit 500-1 for communication with indoor monitoring base unit 400, for example, entrance slave unit 500-1 transmits a connection request including a transmission source ID (ID of entrance slave unit 500-1) and a transmission destination ID (ID of indoor monitoring base unit 400) using both SL 10 and SL 21.

When indoor monitoring base unit 400 receives the connection request in SL 21 and confirms that the connection request is intended to indoor monitoring base unit 400, based on the transmission destination ID, indoor monitoring base unit 400 transmits a connection request confirmation in SL 11 and enters a communication state. In the communication state, entrance slave unit 500-1 transmits image data using SL 12 to SL 19 and transmits speech data using SL 20 in UL to indoor monitoring base unit 400. Moreover, indoor monitoring base unit 400 transmits speech data using SL 9 in DL to entrance slave unit 500-1.

When indoor monitoring slave unit 600 receives a connection request in SL 10 and confirms that the connection request is not intended to indoor monitoring slave unit 600, indoor monitoring slave unit 600 disregards the connection request and does not transmit any connection request confirmation.

Note that, in this system, entrance slave unit 500 can issue a connection request to both indoor monitoring base unit 400 and indoor monitoring slave unit 600.

Moreover, when a camera is built in indoor monitoring base unit 400 and indoor monitoring slave unit 600, a video phone call can be made between indoor monitoring base unit 400 and indoor monitoring slave unit 600.

### Industrial Availability

The present disclosure is suitable for use in intercom systems.

### Reference Sign List

1, 2 Intercom system
100 Lobby station
101, 201, 301, 401, 501 Cable connection section
102, 302, 402, 502 Key input section
103, 303, 403, 503 Speaker
104, 304, 404, 504 Microphone
105, 305, 405, 505 Speech I/F section
106, 506 Camera section
107, 207, 307, 407, 507 Control section
108, 208, 308, 408, 508 Transmission-data processing section
110, 210, 310, 410, 510 Transmission driver
111, 211, 311, 411, 511 Reception driver
112, 212, 312, 512 Routing control section
113, 213, 313, 413, 513 Received-data processing section
114, 214, 314, 414, 514 Identifier storage section
115, 215, 315, 515 Transfer-data processing section
131, 231, 331, 431, 531 First-clock generation section
132, 232, 332, 432, 532 Packet generation section
133, 233, 333, 433, 533 Data reproduction section
134, 234, 334, 434, 534 Connection-state detection section
135, 235, 335, 435, 535 Identifier setting section
150 Number-of-repetition patterns detection section
151 First unique pattern detection section
152 Second unique pattern detection section
153 Enabling-signal generation section
154 Timing adjustment section
155 Received-data decoding section
156 Second-clock generation section
171 Reception buffer
172 Data inversion section
173 Selection switch
174 Error detection section
175 Data extraction section
200 Repeater
300 Indoor monitor
306, 406 Display section
400 Indoor monitoring base unit
450 Power supply section
461, 462, 561, 562, 571, 572 Filter
567 Diode circuit
500 Entrance slave unit
600 Indoor monitoring slave unit
2121 Selection switch
2122 OR circuit
2123 Duty ratio correction section
2124 Selector
2125 Slection determining section

## Claims

1. A communication apparatus of an intercom system (1, 2), the communication apparatus being an apparatus that is to be connected with each of first and second devices (100, 200, 300, 400, 500) through a two-wire cable and that is configured to receive a packet signal transmitted from the first device (100, 200, 300, 400, 500) and to transfer the packet signal to the second device (100, 200, 300, 400, 500), the communication apparatus comprising:
a receiving section (113, 213, 313, 513) that is configured to receive data in which a preamble and a synchronization pattern are placed in a predetermined position, wherein the receiving section (113, 213, 313, 513) is configured to decode the received data to obtain decoded data, to detect a unique pattern in the preamble and to decode each bit of the received data based on a timing at which the unique pattern is detected;
a data reproduction section (133, 233, 333, 533) that is configured to detect the synchronization pattern from the decoded data; and
a connection-state detection section (134, 234, 334, 534) that is configured to determine whether the two-wire cable is in normal connection or reverse connection, based on the detected synchronization pattern,
a transfer-data processing section (115, 215, 315, 515) that is configured to generate a newly generated preamble, which is a preamble at the time of normal connection, and to generate transfer-data by modulating the decoded data and the newly generated preamble;
a transmission section (110, 210, 410, 510) that is configured to transfer the transfer data to the second device (100, 200, 300, 400, 500),
**characterized in that**
the transfer-data processing section (115, 215, 315, 515) is configured to generate, when the two-wire cable is in normal connection, the transfer-data by modulating the decoded data and the preamble at the time of normal connection, and
the transfer-data processing section (115, 215, 315, 515) is configured to generate, when the two-wire cable is in reverse connection, the transfer-data by modulating the decoded data and the preamble at the time of reverse connection in which a polarity of the preamble at the time of normal connection is inverted, wherein
the data reproduction section (133, 233, 333, 533) is configured to perform, when the two-wire cable is in normal connection, post-processing while leaving a data portion of the decoded data unchanged, and the data reproduction section (133, 233, 333, 533) is configured to perform, when the two-wire cable is in reverse connection, the post-processing after inverting the data portion of the decoded data.

2. The communication apparatus according to claim 1, further comprising
a first-clock generation section (231) configured to generate a first clock (CLK),
the receiving section (113, 213, 313, 513) further comprising:
a number-of-repetition patterns detection section (150),
a first unique-pattern detection section (151) configured to store a first prescribed number of clocks for unique pattern detection,
a second unique-pattern detection section (152) configured to store the first prescribed number of clocks for unique pattern detection,
wherein the clock (CLK) of the first-clock generation section (131, 231, 331, 531) is inputted to the first unique-pattern detection section (151), and the second unique-pattern detection section (152),
wherein the number-of-repetition patterns detection section (150) is configured to count clocks of the first-clock generation section (131, 231, 331, 531) between adjacent falling edges or adjacent rising edges of the preamble, and to output a trigger signal indicating the start of operation to the first and second unique-pattern detection sections (151, 152),
the first unique-pattern detection section (151), upon input of a trigger signal from the number-of-repetition patterns detection section (150), is configured to sample the preamble data, with the clocks of the first-clock generation section (131, 231, 331, 531), and to count clocks between adjacent falling edges,
wherein the first unique-pattern detection section (151) is further configured to, when the number of clocks between adjacent falling edges coincides with any number in the first prescribed number of clocks, determine that the unique pattern has been detected,
the second unique-pattern detection section (152), upon input of a trigger signal from the number-of-repetition patterns detection section (150), is configured to sample, at the same timing as the first unique-pattern detection section (151), the preamble data and to count clocks between adjacent rising edges,
wherein the second unique-pattern detection section (152) is further configured to, when the number of clocks between the adjacent rising edges coincides with any number in the first prescribed number of clocks, determine that the unique pattern has been detected.

3. The communication apparatus according to claim 2, the receiving section (113, 213, 313, 513) further comprising:
an enabling-signal generation section (153) configured to, upon input of a signal that the unique pattern has been detected from the first unique-pattern detection section (151) or the second unique-pattern detection section (152), output an enabling signal permitting a data reproduction operation to the data reproduction section (133, 233, 333, 533).

4. The communication apparatus according to claim 3, the receiving section (113, 213, 313, 513) further comprising:
a timing adjustment section (154) including a timing generation counter, the timing adjustment section (154) being configured to, upon input of the enabling signal from enabling-signal generation section (153), detect a waveform edge of a first bit of the synchronization pattern, and
a received-data decoding section (155) configured to receive a counter value from the timing adjustment section (154), scan detect logical inversion of a waveform for 1 bit of the received data in the range of a data reproduction window, and to apply decoding processing of the data to obtain the decoded data,
wherein the timing adjustment section (154) is further configured to, in case the counter value differs from a normal value, to correct the counter value and to output the corrected counter value to the received-data decoding section (155).

5. The communication apparatus according to any of claims 2 to 4,
wherein the connection-state detection section (134, 234, 334, 534) is configured to determine that the two-wire cable is in normal connection in case the first unique-pattern detection section (151) determines that the unique pattern has been detected, and to determine that the two-wire cable is in reverse connection in case the second unique-pattern detection section (152) determines that the unique pattern has been detected.

6. An intercom system (1, 2) comprising:
a lobby station (100) for a visitor to call a resident of a destination of the visitor;
an indoor monitor (300) for the resident to answer in response to the calling from the visitor; and
a plurality of repeaters (200) to be connected to each other via a two-wire cable, using daisy-chain-type wiring, wherein
one of the plurality of repeaters (200) is connected to the lobby station (100) via a two-wire cable,
each of the plurality of repeaters (200) is connected to the indoor monitor (300) via a two-wire cable and is configured to relay a signal to be transmitted and received between the lobby station (100) and the indoor monitor (300), and
at least one of the plurality of repeaters (200) comprises the communication apparatus according to any one of claims 1 to 5.

7. The intercom system (1, 2) according to claim 6, wherein one or some of the plurality of repeaters (200) comprise the communication apparatus,
a remaining one or more of the plurality of repeaters (200) comprise a second communication apparatus, wherein
the second communication apparatus is connected to each of first and second devices (100, 300) via a two-wire cable,
the second communication apparatus comprises:
a receiving section that is configured to receive data in which a preamble and a synchronization pattern are placed in a predetermined position, the receiving section being configured for decoding the received data to obtain decoded data;
a duty ratio correction section (2123) that is configured to generate second transfer data by correcting a duty ratio of each bit of the received data; and
a transmission section that is configured to transfer the second transfer data to the second device.

8. An intercom system (1, 2) comprising:
a lobby station (100) for a visitor to call a resident of a destination of the visitor;
one or more indoor monitors (300) for the resident to answer in response to the calling from the visitor; and
the lobby station (100) is connected to at least one of the one or more indoor monitors (300) via a two-wire cable, and the one or more indoor monitors (300) are connected to each other via a two-wire cable, using daisy-chain-type wiring, and
the one or more indoor monitors (300) comprise the communication apparatus (200) according to any one of claims 1 to 5.

9. An intercom system (1, 2) comprising:
a lobby station (100) for a visitor to call a resident of a destination of the visitor;
one or more indoor monitors (300) to be connected to the lobby station (100) via a two-wire cable and used for the resident to answer in response to the calling from the visitor, wherein
the lobby station (100) is connected to a device other than the one or more indoor monitors (300) via a two-wire cable and comprises the communication apparatus according to any one of claims 1 to 5.

10. The intercom system (1, 2) according to any one of claims 4 to 9, wherein the lobby station (100) is configured to broadcast image data and speech data to all of the one or more indoor monitors (300).

11. An intercom system (1, 2) in which an indoor monitor (300) and one entrance slave unit (500) are connected to each other via a two-wire cable, and a plurality of entrance slave units (500) are connected to each other via a two-wire cable, using daisy-chain-type wiring, wherein
at least one of the entrance slave units (500) comprises the communication apparatus (200) according to any one of claims 1 to 5.

12. A communication method for a communication apparatus of an intercom system (1, 2), the communication apparatus being an apparatus that is to be connected with each of first and second devices (100, 300, 400, 500) through a two-wire cable and that receives a packet signal transmitted from the first device and transfers the packet signal to the second device, the method comprising:
receiving data in which a preamble and a synchronization pattern are placed in a predetermined position;
decoding the received data to obtain decoded data;
detecting a unique pattern in the preamble;
decoding each bit of the received data based on a timing at which the unique pattern is detected;
detecting the synchronization pattern from the decoded data;
determining whether the two-wire cable is in normal connection or reverse connection based on the detected synchronization pattern;
newly generating the preamble, which is a preamble at the time of normal connection;
determining whether the two-wire cable is in normal connection or reverse connection, based on a type of the detected unique pattern;
generating transfer-data by modulating the decoded data and the newly generated preamble; and
transferring the transfer data to the second device,
**characterized in that** the method further comprises:
generating, when the two-wire cable is in normal connection, the transfer-data by modulating the decoded data and the preamble at the time of normal connection;
generating, when the two-wire cable is in reverse connection, the transfer-data by modulating the decoded data and the preamble at the time of reverse connection in which a polarity of the preamble at the time of normal connection is inverted;
performing, when the two-wire cable is in normal connection, post-processing while leaving a data portion of the decoded data unchanged, and performing, when the two-wire cable is in reverse connection, the post-processing after inverting the data portion of the decoded data.

## Patentansprüche

1. Kommunikationsvorrichtung eines Gegensprechsystems (1, 2), wobei die Kommunikationsvorrichtung eine Vorrichtung ist, die sowohl mit einem ersten als auch einem zweiten Gerät (100, 200, 300, 400, 500) durch ein zweiadriges Kabel zu verbinden ist, und die ausgestaltet ist, ein Paketsignal zu empfangen, das von dem ersten Gerät (100, 200, 300, 400, 500) übermittelt wurde, und das Paketsignal an das zweite Gerät (100, 200, 300, 400, 500) zu übermitteln, wobei die Kommunikationsvorrichtung umfasst:
einen Empfangsabschnitt (113, 213, 313; 513), der ausgestaltet ist, Daten zu empfangen, in denen eine Präambel und ein Synchronisationsmuster an einer vorbestimmten Position platziert sind, wobei der Empfangsabschnitt (113, 213, 313, 513) ausgestaltet ist, die empfangenen Daten zu dekodieren, um dekodierte Daten zu erhalten, ein eindeutiges Muster in der Präambel zu erfassen und jedes Bit der empfangenen Daten auf Basis eines Timings zu dekodieren, zu dem das eindeutige Muster erfasst ist,
einen Datenwiedergabeabschnitt (133, 233, 333, 533), der ausgestaltet ist, das Synchronisationsmuster aus den dekodierten Daten zu erfassen, und
einen Verbindungszustandserfassungsabschnitt (134, 234, 334, 534), der ausgestaltet ist, auf Basis des erfassten Synchronisationsmusters zu bestimmen, ob das zweiadrige Kabel in normaler Verbindung oder umgekehrter Verbindung vorliegt,
einen Übermittlungsdatenverarbeitungsabschnitt (115, 215, 315, 515), der ausgestaltet ist, eine neu erzeugte Präambel, die eine Präambel zum Zeitpunkt einer normalen Verbindung ist, zu erzeugen und Übermittlungsdaten durch Modulieren der dekodierten Daten und der neu erzeugten Präambel zu erzeugen,
einen Übermittlungsabschnitt (110, 210, 410, 510), der ausgestaltet ist, die Übermittlungsdaten an das zweite Gerät (100, 200, 300, 400, 500) zu übermitteln,
**gekennzeichnet dadurch, dass**
der Übermittlungsdatenverarbeitungsabschnitt (115, 215, 315, 515) ausgestaltet ist, wenn das zweiadrige Kabel in normaler Verbindung vorliegt, die Übermittlungsdaten durch Modulieren der dekodierten Daten und der Präambel zum Zeitpunkt einer normalen Verbindung zu modulieren, und
der Übermittlungsdatenverarbeitungsabschnitt (115, 215, 315, 515) ausgestaltet ist, wenn das zweiadrige Kabel in umgekehrter Verbindung vorliegt, die Übermittlungsdaten durch Modulieren der dekodierten Daten und der Präambel zum Zeitpunkt einer umgekehrten Verbindung zu erzeugen, bei der eine Polarität der Präambel zum Zeitpunkt der normalen Verbindung umgekehrt ist, wobei
der Datenwiedergabeabschnitt (133, 233, 333, 533) ausgestaltet ist, wenn das zweiadrige Kabel in normaler Verbindung vorliegt, eine Nachbearbeitung durchzuführen, bei der ein Datenabschnitt der dekodierten Daten unverändert bleibt, und der Datenwiedergabeabschnitt (133, 233, 333, 533) ausgestaltet ist, wenn das zweiadrige Kabel in umgekehrter Verbindung vorliegt, die Nachverarbeitung nach Umkehren des Datenabschnitts der dekodierten Daten durchzuführen.

2. Kommunikationsvorrichtung nach Anspruch 1, ferner mit:
einem ersten Takterzeugungsabschnitt (231), der ausgestaltet ist, einen ersten Takt (CLK) zu erzeugen,
wobei der Empfangsabschnitt (113, 213, 313, 513) ferner umfasst:
einen Erfassungsabschnitt (150) für eine Wiederholungszahl von Mustern,
einem ersten Erfassungsabschnitt (151) für ein eindeutiges Muster, der ausgestaltet ist, eine erste vorgeschriebene Zahl von Takten für eine Erfassung eines eindeutigen Musters zu speichern,
einen zweiten Erfassungsabschnitt (152) für ein eindeutiges Muster, der ausgestaltet ist, die erste vorgeschriebene Zahl von Takten für eine Erfassung eines eindeutigen Musters zu speichern,
wobei der Takt (CLK) des ersten Takterzeugungsabschnitts (131, 231, 331, 531) in den ersten Erfassungsabschnitt (151) für ein eindeutiges Muster und den zweiten Erfassungsabschnitt (152) für ein eindeutiges Muster eingegeben wird,
wobei der Erfassungsabschnitt (150) für eine Wiederholungszahl von Mustern ausgestaltet ist, Takte des ersten Takterzeugungsabschnitts (131, 231, 331, 531) zwischen benachbarten abfallenden Flanken oder benachbarten ansteigenden Flanken der Präambei zu zählen und ein Auslösesignal auszugeben, das den Start eines Betriebs des ersten und zweiten Erfassungsabschnitts (151, 152) für ein eindeutiges Muster angibt,
der erste Erfassungsabschnitt (151) für ein eindeutiges Muster in Antwort auf eine Eingabe eines Auslösesignals von dem Erfassungsabschnitt (150) für die Wiederholungszahl von Mustern ausgestaltet ist, die Präambeldaten mit den Takten des ersten Takterzeugungsabschnitts (131, 231, 331, 531) abzutasten und Takte zwischen benachbarten abfallenden Flanken zu zählen,
wobei der erste Erfassungsabschnitt (151) für ein eindeutiges Muster ferner ausgestaltet ist, zu bestimmen, wenn die Zahl von Takten zwischen benachbarten abfallenden Flanken mit irgendeiner einer Zahl in der ersten vorgeschriebenen Zahl von Takten zusammenfällt, dass das eindeutige Muster erfasst wurde,
der zweite Erfassungsabschnitt (152) für ein eindeutiges Muster in Antwort auf eine Eingabe eines Auslösesignals von dem Erfassungsabschnitt (150) für die Wiederholungszahl von Mustern ausgestaltet ist, die Präambeldaten mit demselben Timing wie der erste Erfassungsabschnitt (151) für ein eindeutiges Muster abzutasten und Takte zwischen benachbarten ansteigenden Flanken zu zählen,
wobei der zweite Erfassungsabschnitt (152) für ein eindeutiges Muster ferner ausgestaltet ist, zu bestimmen, wenn die Zahl von Takten zwischen den benachbarten ansteigenden Flanken mit irgendeiner einer Zahl in der ersten vorgeschriebenen Zahl von Takten zusammenfällt, dass das eindeutige Muster erfasst wurde.

3. Kommunikationsvorrichtung nach Anspruch 2, wobei der Empfangsabschnitt (113, 213, 313, 513) ferner umfasst:
einen Freigabesignalerzeugungsabschnitt (153), der ausgestaltet ist, in Antwort auf eine Eingabe eines Signals von dem ersten Erfassungsabschnitt (151) für ein eindeutiges Muster oder dem zweiten Erfassungsabschnitt (152) für ein eindeutiges Muster, nach dem das eindeutige Muster erfasst wurde, ein Freigabesignal an den Datenwiedergabeabschnitt (133, 233, 333, 533) auszugeben, das einen Datenwiedergabebetrieb erlaubt.

4. Kommunikationsvorrichtung nach Anspruch 3, wobei der Empfangsabschnitt (113, 213, 313, 513) ferner umfasst:
einen Timingjustierabschnitt (154) mit einem Timingserzeugungszähler, wobei der Timingjustierabschnitt (154) ausgestaltet ist, in Antwort auf eine Eingabe des Freigabesignals von dem Freigabesignalerzeugungsabschnitt (153) eine Wellenformflanke eines ersten Bits des Synchronisationsmusters zu erfassen, und
einen Empfangsdatendekodierabschnitt (155), der ausgestaltet ist, einen Zählerwert von dem Timingjustierabschnitt (154) zu empfangen, in abtastender Weise logische Umkehrungen einer Wellenform für ein Bit der empfangenen Daten in dem Bereich eines Datenwiedergabefensters zu erfassen und eine Dekodierverarbeitung an den Daten durchzuführen, um die dekodierten Daten zu erhalten,
wobei der Timingjustierabschnitt (154) ferner ausgestaltet ist, im Fall, dass sich der Zählerwert von einem normalen Wert unterscheidet, den Zählerwert zu korrigieren und den korrigierten Zählerwert an den Empfangsdatendekodierabschnitt (155) auszugeben.

5. Kommunikationsvorrichtung nach einem der Ansprüche 2 bis 4,
wobei der Verbindungszustandserfassungsabschnitt (134, 234, 334, 534) ausgestaltet ist, zu bestimmen, dass das zweiadrige Kabel in normaler Verbindung vorliegt, im Fall, dass der erste Erfassungsabschnitt (151) für das eindeutige Muster bestimmt, dass das eindeutige Muster erfasst wurde, und zu bestimmen, dass das zweiadrige Kabel in umgekehrter Verbindung vorliegt, im Fall, dass der zweite Erfassungsabschnitt (152) für das eindeutige Muster bestimmt, dass das eindeutige Muster erfasst wurde.

6. Gegensprechsystem (1, 2), mit:
einer Lobby-Station (100) für einen Besucher, um einen Bewohner eines Ziels des Besuchers anzurufen,
einem Innen-Monitor (300) für den Bewohner, um in Antwort auf das Anrufen von dem Besucher zu antworten, und
mehreren Repeatern (200), die miteinander über ein zweiadriges Kabel in einer reihenschaltungsweisen Verdrahtung zu verbinden sind, wobei
einer der mehreren Repeater (200) mit der Lobby-Station (100) über ein zweiadriges Kabel verbunden ist,
jeder der mehreren Repeater (200) mit dem Innen-Monitor (300) über ein zweiadriges Kabel verbunden ist und ausgestaltet ist, ein Signal weiterzuleiten, das zwischen der Lobby-Station (100) und dem Innen-Monitor (300) zu übermitteln und zu empfangen ist, und
wenigstens einer der mehreren Repeater (200) die Kommunikationsvorrichtung nach einem der Ansprüche 1 bis 5 aufweist.

7. Gegensprechsystem (1, 2) nach Anspruch 6, wobei einer oder mehrere der mehreren Repeater (200) die Kommunikationsvorrichtung aufweist,
ein verbleibender oder verbleibende der mehreren Repeater (200) eine zweite Kommunikationsvorrichtung aufweisen, wobei
die zweite Kommunikationsvorrichtung sowohl mit einem ersten als auch einem zweiten Gerät (100, 300) über ein zweiadriges Kabel verbunden ist,
wobei die zweite Kommunikationsvorrichtung umfasst:
einen Empfangsabschnitt, der ausgestaltet ist, Daten zu empfangen, in denen eine Präambel und ein Synchronisationsmuster an einer vorbestimmten Position platziert sind, wobei der Empfangsabschnitt dazu ausgestaltet ist, die empfangenen Daten zu dekodieren, um dekodierte Daten zu erhalten,
einen Korrekturabschnitt (2123) für eine relative Einschaltdauer, der ausgestaltet ist, zweite Übermittlungsdaten durch Korrigieren einer relativen Einschaltdauer eines jeden Bits der empfangenen Daten zu erzeugen, und
einen Übermittlungsabschnitt, der ausgestaltet ist, die zweiten Übermittlungsdaten an das zweite Gerät zu übermitteln.

8. Gegensprechsystem (1, 2), mit:
einer Lobby-Station (100) für einen Besucher, um einen Bewohner eines Ziels des Besuchers anzurufen,
einem oder mehreren Innen-Monitore (300) für den Bewohner, um in Antwort auf das Anrufen von dem Besucher zu antworten, und
die Lobby-Station (100) mit wenigstens einem des einen oder der mehreren Innen-Monitore (300) über ein zweiadriges Kabel verbunden ist, und der eine oder die mehreren Innen-Monitore (300) unter Verwendung einer reihenschaltungsartigen Verdrahtung miteinander über ein zweiadriges Kabel verbunden sind, und
der eine oder die mehreren Innen-Monitore (300) die Kommunikationsvorrichtung (200) nach einem der Ansprüche 1 bis 5 aufweist.

9. Gegensprechsystem (1, 2), mit:
einer Lobby-Station (100) für einen Besucher, um einen Bewohner eines Ziels des Besuchers anzurufen,
einem oder mehreren Innen-Monitore (300), die mit der Lobby-Station (100) über ein zweiadriges Kabel zu verbinden sind und verwendet werden, damit der Bewohner in Antwort auf das Anrufen von dem Besucher antwortet, wobei
die Lobby-Station (100) mit einem Gerät mit Ausnahme des einen oder der mehreren Innen-Monitore (300) über ein zweiadriges Kabel verbunden ist und die Kommunikationsvorrichtung nach einem der Ansprüche 1 bis 5 aufweist.

10. Gegensprechsystem (1, 2) nach einem der Ansprüche 4 bis 9, wobei die Lobby-Station (100) ausgestaltet ist, Bilddaten und Sprachdaten an alle des einen oder der mehreren Innen-Monitore (300) zu senden.

11. Gegensprechsystem (1, 2), bei dem ein Innen-Monitor (300) und eine Eingangs-Slave-Einheit (500) miteinander über ein zweiadriges Kabel verbunden sind, und mehrere Eingangs-Slave-Einheiten (500) unter Verwendung einer reihenschaltungsartigen Schaltung miteinander über ein zweiadriges Kabel verbunden sind, wobei
wenigstens eine der Eingangs-Slave-Einheiten (500) die Kommunikationsvorrichtung (200) nach einem der Ansprüche 1 bis 5 aufweist,

12. Kommunikationsverfahren für eine Kommunikationsvorrichtung eines Gegensprechsystems (1, 2), wobei die Kommunikationsvorrichtung eine Vorrichtung ist, die mit sowohl einem ersten Gerät als auch einem zweiten Gerät (100, 300, 400, 500) über ein zweiadriges Kabel zu verbinden ist und die ein von dem ersten Gerät übermitteltes Paketsignal empfängt und das Paketsignal an das zweite Gerät übermittelt, wobei das Verfahren umfasst:
Empfangen von Daten, in denen eine Präambel und ein Synchronisationsmuster an einer vorbestimmten Position platziert sind,
Dekodieren der empfangenen Daten zum Erhalten von dekodierten Daten,
Erfassen eines eindeutigen Musters in der Präambel,
Dekodieren jedes Bits der empfangenen Daten auf Basis eines Timings, zu dem das eindeutige Muster erfasst wird,
Erfassen des Synchronisationsmusters aus den dekodierten Daten, Bestimmen, ob das zweiadrige Kabel in einer normalen oder einer umgekehrten Verbindung vorliegt, auf Basis des erfassten Synchronisationsmusters,
neues Erzeugen der Präambel, die eine Präambel zum Zeitpunkt einer normalen Verbindung ist,
Bestimmen, ob das zweiadrige Kabel in normaler Verbindung oder in umgekehrter Verbindung vorliegt, auf Basis einer Art des erfassten eindeutigen Musters,
Erzeugen von Übermittlungsdaten durch Modulieren der dekodierten Daten und der neu erzeugten Präambel, und
Übermitteln der Übermittlungsdaten an das zweite Gerät,
**gekennzeichnet dadurch, dass** das Verfahren ferner umfasst:
Erzeugen der Übermittlungsdaten durch Modulieren der dekodierten Daten und der Präambel zum Zeitpunkt einer normalen Verbindung, wenn das zweiadrige Kabel in einer normalen Verbindung vorliegt,
Erzeugen, wenn das zweiadrige Kabel in umgekehrter Verbindung vorliegt, der Übermittlungsdaten durch Modulieren der dekodierten Daten und der Präambel zum Zeitpunkt einer umgekehrten Verbindung, bei der eine Polarität der Präambel zum Zeitpunkt der normalen Verbindung umgekehrt ist,
Durchführen, wenn das zweiadrige Kabel in normaler Verbindung vorliegt, einer Nachverarbeitung unter Unverändertlassen eines Datenabschnitts der dekodierten Daten und Durchführen der Nachverarbeitung nach einem Umkehren des Datenabschnitts der dekodierten Daten, wenn das zweiadrige Kabel in umgekehrter Verbindung vorliegt.

## Revendications

1. Dispositif de communication d'un système d'interphone (1, 2), le dispositif de communication étant un dispositif qui est à connecter à chacun de premier et deuxième dispositifs (100, 200, 300, 400, 500) via un câble à deux fils et qui est configuré pour recevoir un signal de paquet transmis par le premier dispositif (100, 200, 300, 400, 500) et pour transférer le signal de paquet au deuxième dispositif (100, 200, 300, 400, 500), le dispositif de communication comprenant:
une section de réception (113, 213, 313, 513) qui est configurée pour recevoir des données dans lesquelles un préambule et un motif de synchronisation sont placés dans une position prédéterminée, dans lequel la section de réception (113, 213, 313, 513) est configurée pour décoder les données reçues pour obtenir des données décodées, pour détecter un motif unique dans le préambule et pour décoder chaque bit des données reçues sur la base d'un timing auquel le motif unique est détecté,
une section de reproduction de données (133, 233, 333, 533) qui est configurée pour détecter le motif de synchronisation à partir des données décodées, et
une section de détection d'état de connexion (134, 234, 334, 534) qui est configurée pour déterminer sur la base du motif de synchronisation détecté si le câble à deux fils est en connexion normale ou en connexion inverse,
une section de traitement de données de transfert (115, 215, 315, 515) qui est configurée pour générer un préambule nouvellement généré qui est un préambule au moment d'une connexion normale, et pour générer des données de transfert en modulant les données décodées et le préambule nouvellement généré,
une section de transmission (110, 210, 410, 510) qui est configurée pour transférer les données de transfert au deuxième dispositif (100, 200, 300, 400, 500),
**caractérisé par le fait que**
la section de traitement de données de transfert (115, 215, 315, 515) est configurée pour générer, lorsque le câble à deux fils est en connexion normale, les données de transfert en modulant les données décodées et le préambule au moment d'une connexion normale, et
la section de traitement de données de transfert (115, 215, 315, 515) est configurée pour générer, lorsque le câble à deux fils est en connexion inverse, les données de transfert en modulant les données décodées et le préambule au moment de la connexion inverse dans laquelle une polarité du préambule au moment de la connexion normale est inversée, dans lequel
la section de reproduction de données (133, 233, 333, 533) est configurée pour effectuer, lorsque le câble à deux fils est en connexion normale, un post-traitement tout en laissant inchangée une portion de données des données décodées, et la section de reproduction de données (133, 233, 333, 533) est configurée pour effectuer, lorsque le câble à deux fils est en connexion inverse, le post-traitement après avoir inversé la portion de données des données décodées.

2. Dispositif de communication selon la revendication 1, comprenant en outre:
une section de génération de première horloge (231) configurée pour générer une première horloge (CLK),
la section de réception (113, 213, 313, 513) comprenant en outre:
une section de détection de nombre de répétition de motifs (150),
une première section de détection de motif unique (151) configurée pour stocker un premier nombre prescrit d'horloges pour une détection de motif unique,
une deuxième section de détection de motif unique (152) configurée pour stocker le premier nombre prescrit d'horloges pour une détection de motif unique,
dans lequel l'horloge (CLK) de la section de génération de première horloge (131, 231, 331, 531) est entrée dans la première section de détection de motif unique (151) et dans la deuxième section de détection de motif unique (152),
dans lequel la section de détection de nombre de répétition de motifs (150) est configurée pour compter des horloges de la section de génération de première horloge (131, 231, 331, 531) entre des fronts descendants adjacents ou des fronts montants adjacents du préambule, et pour émettre un signal de déclenchement indiquant le début d'un fonctionnement des première et deuxième sections de détection de motif unique (151, 152),
la première section de détection de motif unique (151), en réponse à une entrée d'un signal de déclenchement à partir de la section de détection de nombre de répétitions de motifs (150), est configurée pour échantillonner les données de préambule, avec les horloges de la section de génération de première horloge (131, 231, 331, 531), et pour compter des horloges entre fronts descendants adjacents,
dans lequel la première section de détection de motif unique (151) est en outre configurée pour, lorsque le nombre d'horloges entre des fronts descendants adjacents coïncide avec n'importe quel nombre dans le premier nombre prescrit d'horloges, déterminer que le motif unique a été détecté,
la deuxième section de détection de motif unique (152), en réponse à une entrée d'un signal de déclenchement à partir de la section de détection de nombre de répétitions de motifs (150), est configurée pour échantillonner, au même timing que la première section de détection de motif unique (151), les données de préambule et pour compter des horloges entre fronts montants adjacents,
dans lequel la deuxième section de détection de motif unique (152) est en outre configurée pour, lorsque le nombre d'horloges entre les fronts montants adjacents coïncide avec n'importe quel nombre dans le premier nombre prescrit d'horloges, déterminer que le motif unique a été détecté.

3. Dispositif de communication selon la revendication 2, la section de réception (113, 213, 313, 513) comprenant en outre:
une section de génération de signal d'autorisation (153) configurée pour, en réponse à une entrée d'un signal indiquant que le motif unique a été détecté, provenant de la première section de détection de motif unique (151) ou de la deuxième section de détection de motif unique (152), émettre à la section de reproduction de données (133, 233, 333, 533) un signal d'autorisation permettant une opération de reproduction de données.

4. Dispositif de communication selon la revendication 3, la section de réception (113, 213, 313, 513) comprenant en outre:
une section d'ajustement de timing (154) comprenant un compteur de génération de timing, la section d'ajustement de timing (154) étant configurée pour, en réponse à une entrée du signal d'autorisation provenant de la section de génération de signal d'autorisation (153), détecter un front de forme d'onde d'un premier bit du motif de synchronisation, et
une section de décodage de données reçues (155) configurée pour recevoir une valeur de compteur provenant de la section d'ajustement de timing (154), détecter par balayage des inversions logiques d'une forme d'onde pour un bit des données reçues dans la plage d'une fenêtre de reproduction de données, et pour appliquer un traitement de décodage aux données pour obtenir les données décodées,
dans lequel la section d'ajustement de timing (154) est en outre configurée pour, au cas où la valeur de compteur diffère d'une valeur normale, corriger la valeur de compteur et délivrer la valeur de compteur corrigée à la section de décodage de données reçues (155).

5. Dispositif de communication selon l'une quelconque des revendications 2 à 4,
dans lequel la section de détection d'état de connexion (134, 234, 334, 534) est configurée pour déterminer que le câble à deux fils est en connexion normale au cas où la première section de détection de motif unique (151) détermine que le motif unique a été détecté, et pour déterminer que le câble à deux fils est en connexion inverse au cas où la deuxième section de détection de motif unique (152) détermine que le motif unique a été détecté.

6. Système d'interphone (1, 2) comprenant:
une station de hall (100) permettant à un visiteur d'appeler un résident d'une destination du visiteur,
un moniteur intérieur (300) permettant au résident de répondre en réponse à l'appel du visiteur, et
une pluralité de répéteurs (200) qui sont à connecter les uns aux autres via un câble à deux fils, en utilisant un câblage de type guirlande, dans lequel
l'un de la pluralité de répéteurs (200) est connecté à la station de hall (100) via un câble à deux fils,
chacun de la pluralité de répéteurs (200) est connecté au moniteur intérieur (300) via un câble à deux fils et est configuré pour relayer un signal à transmettre et à recevoir entre la station de hall (100) et le moniteur intérieur (300), et
au moins un de la pluralité de répéteurs (200) comprend le dispositif de communication selon l'une quelconque des revendications 1 à 5.

7. Système d'interphone (1, 2) selon la revendication 6, dans lequel un ou plusieurs de la pluralité de répéteurs (200) comprend/comprennent le dispositif de communication,
un ou plusieurs répéteurs restants parmi la pluralité de répéteurs (200) comprend/comprennent un deuxième dispositif de communication, dans lequel
le deuxième dispositif de communication est connecté à chacun des premier et deuxième dispositifs (100, 300) via un câble à deux fils,
le deuxième dispositif de communication comprend:
une section de réception qui est configurée pour recevoir des données dans lesquelles un préambule et un motif de synchronisation sont placés dans une position prédéterminée, la section de réception étant configurée pour décoder les données reçues afin d'obtenir des données décodées,
une section de correction de facteur de marche (2123) qui est configurée pour générer des deuxièmes données de transfert en corrigeant un facteur de marche de chaque bit des données reçues, et une section de transmission qui est configurée pour transférer les deuxièmes données de transfert au deuxième dispositif.

8. Système d'interphone (1, 2) comprenant:
une station de hall (100) permettant à un visiteur d'appeler un résident d'une destination du visiteur,
un ou plusieurs moniteur(s) intérieur(s) (300) permettant au résident de répondre en réponse à l'appel du visiteur, et
la station de hall (100) est connectée à au moins l'un dudit un ou desdits plusieurs moniteurs intérieurs (300) via un câble à deux fils, et ledit un ou lesdits plusieurs moniteurs intérieurs (300) sont connectés les uns aux autres via un câble à deux fils, en utilisant un câblage de type guirlande, et ledit un ou lesdits plusieurs moniteurs intérieurs (300) comprend/comprennent le dispositif de communication (200) selon l'une quelconque des revendications 1 à 5.

9. Système d'interphone (1, 2) comprenant:
une station de hall (100) permettant à un visiteur d'appeler un résident d'une destination du visiteur,
un ou plusieurs moniteurs intérieurs (300) qui sont à connecter à la station de hall (100) via un câble à deux fils et utilisés pour que le résident réponde en réponse à l'appel du visiteur, dans lequel
la station de hall (100) est connectée à un dispositif autre que ledit un ou lesdits plusieurs moniteurs intérieurs (300) via un câble à deux fils et comprend le dispositif de communication selon l'une quelconque des revendications 1 à 5.

10. Système d'interphone (1, 2) selon l'une quelconque des revendications 4 à 9, dans lequel la station de hall (100) est configurée pour diffuser des données d'image et des données vocales à l'ensemble dudit un ou desdits plusieurs moniteurs intérieurs (300).

11. Système d'interphone (1, 2) dans lequel un moniteur intérieur (300) et une unité esclave d'entrée (500) sont connectés l'un à l'autre via un câble à deux fils, et une pluralité d'unités esclaves d'entrée (500) sont connectées les unes aux autres via un câble à deux fils, en utilisant un câblage de type guirlande, dans lequel
au moins l'une des unités esclaves d'entrée (500) comprend le dispositif de communication (200) selon l'une quelconque des revendications 1 à 5.

12. Procédé de communication pour un dispositif de communication d'un système d'interphone (1, 2), le dispositif de communication étant un dispositif qui doit être connecté à chacun de premier et deuxième dispositifs (100, 200, 300, 400, 500) via un câble à deux fils et qui reçoit un signal de paquet transmis par le premier dispositif et transfère le signal de paquet au deuxième dispositif, le procédé comprenant:
recevoir des données dans lesquelles un préambule et un motif de synchronisation sont placés dans une position prédéterminée,
décoder les données reçues pour obtenir des données décodées,
détecter un motif unique dans le préambule,
décoder chaque bit des données reçues sur la base d'un timing auquel le motif unique est détecté,
détecter le motif de synchronisation à partir des données décodées,
déterminer sur la base du motif de synchronisation détecté si le câble à deux fils est en connexion normale ou en connexion inverse,
générer nouvellement le préambule qui est un préambule au moment d'une connexion normale,
déterminer sur la base d'un type du motif unique détecté si le câble à deux fils est en connexion normale ou en connexion inverse,
générer des données de transfert en modulant les données décodées et le préambule nouvellement généré, et
transférer les données de transfert au deuxième dispositif,
**caractérisé par le fait que** le procédé comprend en outre:
générer, lorsque le câble à deux fils est en connexion normale, les données de transfert en modulant les données décodées et le préambule au moment d'une connexion normale,
générer, lorsque le câble à deux fils est en connexion inverse, les données de transfert en modulant les données décodées et le préambule au moment d'une connexion inverse dans laquelle une polarité du préambule au moment de la connexion normale est inversée,
effectuer, lorsque le câble à deux fils est en connexion normale, un post-traitement tout en laissant inchangée une portion de données des données décodées, et effectuer, lorsque le câble à deux fils est en connexion inverse, le post-traitement après avoir inversé la portion de données des données décodées.
